# FASCICULE DE BREVET EUROPEEN

(11) **EP 1 902 294 B1**
(45) Date de publication et mention de la délivrance du brevet: **16.11.2011**
(21) Numéro de dépôt: 06778764.8
(22) Date de dépôt: 04.07.2006
(51) Int. Cl.: G01N 1/00, G01N 35/00

(54) **PROCEDE AUTOMATISE DE PREPARATION D ANALYSE D ECHANTILLONS DE SANG TOTAL ET DISPOSITIF AUTOMATISE POUR SA MISE EN OEUVRE**
AUTOMATISCHES VERFAHREN ZUR VORBEREITUNG EINER BLUTPROBENANALYSE UND AUTOMATISCHE VORRICHTUNG DAFÜR
AUTOMATED METHOD FOR PREPARING BLOOD SAMPLE ANALYSIS AND AUTOMATED DEVICE THEREFOR

(30) Priorité: 08.07.2005 FR 0507341
(43) Date de publication de la demande: 26.03.2008
(73) Titulaire: HORIBA ABX SAS, F-34000 Montpellier (FR)
(72) Inventeur: LE COMTE, Roger, F-34470 Perols (FR)
(74) Mandataire: Domange, Maxime
(86) Numéro de dépôt international: PCT/FR2006/001583
(87) Numéro de publication internationale: WO 2007/006903

(56) Documents cités:
- EP-A- 0 344 819
- US-A- 4 873 663
- US-A- 4 927 545
- US-A- 5 646 046
- US-A1- 2002 001 542
- US-A1- 2002 021 983

## Description

La présente invention concerne un procédé de préparation d'échantillons de sang total pour la réalisation d'analyse(s) d'hématologie à l'aide d'analyseur(s) sur sang total automatique(s) ainsi qu'un dispositif automatique de préparation pour sa mise en oeuvre.

L'invention vise entre autre à définir un protocole de préparation automatisé d'échantillons de sang total, qui permette d'améliorer la fiabilité des analyses réalisées à partir d'analyseurs automatiques, ainsi que la flexibilité de mise en oeuvre de telles analyses à l'aide de tels analyseurs automatiques.

Les analyses sanguines sur sang total (analyses d'hématologie) sont effectuées sur des tubes de sang comportant la totalité des éléments du sang contrairement aux analyses effectuées sur du plasma ou du sérum sanguin, qui sont obtenus après centrifugation ou coagulation des échantillons sanguins prélevés sur les patients.

Ces analyses sur sang total nécessitent, pour être correctement réalisées, une agitation soutenue des tubes de sang à analyser afin de bien mélanger l'ensemble des constituants du sang tels que les plaquettes et les globules rouges et blancs que l'on va compter lors de l'analyse. Cette phase d'agitation est essentielle pour assurer la qualité des analyses et elle doit être réalisée selon des critères normalisés très peu de temps avant l'analyse.

Les tubes de sang à analyser sont identifiés par un code-barres donnant accès aux informations relatives aux patients ainsi qu'aux analyses qui doivent être effectuées sur les échantillons de sang contenu dans les tubes.

Ces tubes sont triés par catégories et placés sur des supports, communément appelés "portoirs", aptes à recevoir une pluralité de tubes. Après agitation préalable, ils peuvent être ensuite introduits manuellement de façon individuelle dans un analyseur automatique. Les tubes peuvent aussi être disposés dans des cassettes ou "racks", spécifiques à chaque analyseur et comportant une dizaine de logements alignés, dans lesquels les tubes sont disposés et en général fixés manuellement par un opérateur, qui dispose ensuite lesdites cassettes ou "racks" dans un compartiment de chargement de l'analyseur.

Lesdites cassettes sont ensuite prises en charge automatiquement par l'analyseur qui réalise le convoyage, l'agitation des tubes, l'analyse des échantillons de sang contenus dans chaque tube, et enfin le stockage desdites cassettes une fois que l'ensemble des tubes de sang placés sur ces cassettes a été analysé.

De tels analyseurs automatiques aptes à prendre en charge des cassettes ou "racks" portant une pluralité de tubes de sang à analyser sont notamment décrits dans les documents US-A-4609017, EP-A-0726453 et EP-A-0645006.

L'utilisation de tels analyseurs automatiques n'est toutefois pas entièrement satisfaisante. En effet, quel que soit le mode d'analyse utilisé, l'opérateur doit y transférer manuellement chacun des tubes depuis un portoir dans l'analyseur ou dans des cassettes, puis, après analyse, extraire les tubes de l'analyseur ou desdites cassettes pour les replacer dans les portoirs en vue de leur conservation momentanée dans des réfrigérateurs afin de pouvoir les analyser à nouveau en cas de besoin pour vérifier l'exactitude de résultats d'analyses particuliers.

Pour chaque tube à analyser, l'opérateur doit donc prendre soin de bien enfoncer le tube de sang dans la cassette, le tourner de façon à rendre visible l'étiquette code à barres servant à l'identifier vers le lecteur et ne pas se contaminer avec le sang.

En outre, lorsqu'il convient de vérifier un premier résultat, il est difficile pour l'opérateur de repérer parmi l'ensemble des tubes le tube à analyser à nouveau. Il doit en effet vérifier chacun des code-barres étiquetés sur les tubes pour repérer visuellement le tube contenant l'échantillon à vérifier, puis réintroduire le dit tube individuellement dans l'analyseur ou la cassette entière sur laquelle ledit tube est disposé ce qui s'avère particulièrement fastidieux et long à réaliser.

La mise en oeuvre des analyses d'hématologie à l'aide des analyseurs actuels manque donc de flexibilité.

On connaît également des chaînes automatisées d'approvisionnement de tubes à analyser depuis une zone de stockage jusqu'au point d'analyse où ils sont pris en charge par un ou plusieurs analyseurs comme décrit dans le document US 5232081. Il s'agit d'une chaîne de convoyage de cassettes remplies de tubes et disposées sur un rail qui transporte les cassettes d'un analyseur à un autre depuis un compartiment de stockage, la mise en place des cassettes sur le rail de convoyage s'effectuant de manière automatique en fonction de la cadence des analyseurs. Ce type de chaînes automatisées d'approvisionnement d'analyseurs en tubes de sang ne résout pas les problèmes de flexibilité de mise en oeuvre des analyses définis ci-avant, bien qu'ils permettent d'en améliorer la cadence.

De plus, le convoyage de cassettes entières nécessite la construction de système de convoyage de grandes dimensions pour permettre les changements de direction des cassettes sur la chaîne selon des courbes de faible rayon, ce qui rend l'utilisation de telles chaînes de convoyage de cassettes particulièrement mal pratique et difficile dans les laboratoires.

On connaît également le document EP-A-0344819 qui décrit un dispositif permettant essentiellement de stocker et mélanger des tubes de sang à analyser. Le dispositif ne prévoit que l'agitation des tubes et aucune autre étape de préparation des échantillons. Chaque tube est disposé sur un support individuel dans une zone de stockage, puis, un à un, les tubes sont successivement déplacé par un mécanisme excessivement complexe et encombrant vers le dispositif d'agitation et une zone d'accès à un analyseur.

Bien qu'automatique, ce dispositif souffre les mêmes inconvénients que les dispositifs d'analyses à cassettes. Il est nécessaire aux opérateurs d'introduire un à un les tubes dans leur support dans le compartiment de stockage. De plus, son fonctionnement ne permet aucune flexibilité dans l'ordre de préparation et d'analyse des tubes.

Une meilleure flexibilité est procurée par un dispositif tel que décrit dans le document US 4927545. Ce document décrit un dispositif de traitement automatique de sérum sanguin comportant une unité de contrôle et de commande par ordinateur pilotant un bras robotisé 5 axes chargé de manipuler des tubes de sérum sanguins entre différents appareils. Néanmoins, ce dispositif présente un encombrement très important qui le rend inutilisable dans les laboratoires où un très grand nombre d'analyses doivent être réalisées chaque jour et où un grand nombre d'opérateurs circulent et travaillent. De plus le dispositif d'US 4927545 ne permet pas traiter des échantillons de sang total dans la mesure où il ne permet pas une préparation individualisée et automatique des tubes.

Un autre inconvénient des analyseurs automatiques et des chaînes d'approvisionnement automatisé existant tient dans le fait que ceux-ci ne permettent pas de gérer les situations d'urgence habituellement rencontrées dans les laboratoires d'analyses. Dans ces situations d'urgence, un opérateur doit pouvoir impérativement réaliser l'analyse d'un tube de sang qui n'est pas dans l'analyseur ou sur la chaîne d'approvisionnement de l'analyseur pour en obtenir immédiatement les résultats. Pour ce faire, l'opérateur est obligé de stopper les analyses en cours pour introduire le tube à analyser en urgence dans une cassette prête à entrer dans l'analyseur à la place d'un des tubes s'y trouvant. Ensuite, une fois l'analyse en urgence réalisée, le processus d'analyse normal qui avait été stoppé doit être relancé. Là encore, ceci représente des opérations contraignantes et longues pour l'opérateur mais également des arrêts intempestifs des processus d'analyse courants qui nuisent à la fiabilité des analyses réalisées et donc à la précision des résultats de celles-ci.

Le dispositif décrit dans EP-A-0344819 ne permet pas notamment de gérer ces situations d'urgence.

Enfin, les opérateurs doivent chaque jour avant de commencer l'analyse des tubes de sang, réaliser un contrôle de qualité des analyseurs en pratiquant l'analyse de tubes de sang de contrôle dont on connaît les valeurs des différents paramètres et les tolérances par rapport à ces valeurs connues, afin de vérifier l'exactitude des mesures réalisées par analyseur et le cas échéant de régler celui-ci de façon appropriée pour pratiquer par la suite des analyses correctes sur les échantillons inconnus. Selon certaines législations nationales, il convient de pratiquer de tels contrôles de qualité plusieurs fois par jour pour s'assurer qu'en cours de journée les analyseurs ne soient pas déréglés et que la qualité des analyses soit toujours constante.

Les tubes de sang de contrôle doivent être conservés dans des réfrigérateurs lorsqu'ils ne sont pas utilisés si bien que pour chaque contrôle, les opérateurs doivent stopper l'analyseur, ensuite aller prendre un tube de sang de contrôle approprié dans un réfrigérateur, et vérifier si ce tube est approprié au contrôle qui doit être réalisé, à savoir si ce sang de contrôle n'est pas arrivé à péremption et s'il n'a pas subi déjà un trop grand nombre d'analyses. Ensuite, il faut laisser les tubes de sang de contrôle reprendre la température de la pièce puis réaliser le contrôle en pratiquant l'analyse du sang de contrôle conformément aux normes en vigueur et enfin, une fois le contrôle terminé, remettre les tubes au réfrigérateur puis reprendre le cours des analyses normales.

Là encore, ces opérations de contrôle de qualité des analyseurs sont particulièrement longues et laborieuses à mettre en oeuvre pour les opérateurs, qui peuvent ne pas apporter suffisamment de soin au respect des conditions de conservations et d'utilisation des tubes de sang de contrôles.

Un but de la présente invention est donc de fournir un procédé de préparation d'analyses d'échantillons de sang total permettant d'approvisionner un analyseur automatique avec ces échantillons en s'affranchissant des inconvénients liés à l'utilisation des analyseurs automatiques actuels.

La présente invention vise notamment à fournir un procédé de préparation qui rende la mise en oeuvre des analyses d'hématologie plus flexible, notamment en facilitant la gestion des analyses en urgence.

Un but de l'invention est également de proposer un procédé de préparation d'analyses, en particulier d'échantillons de sang total permettant de solutionner les problèmes liés aux opérations de contrôle de qualité des analyseurs.

Un autre but de l'invention est de proposer un procédé qui permette d'améliorer la fiabilité des analyses effectuées, notamment en assurant un parfait conditionnement des tubes contenant les échantillons à analyser mais également en gérant de manière autonome les phases de contrôles et de réglage de l'analyseur.

L'invention vise également à proposer un dispositif dédié à la préparation d'analyses d'échantillons de sang total conformément au procédé de l'invention.

Ainsi, conformément à un premier objet, l'invention atteint ses buts par un procédé de préparation d'analyses d'échantillons de sang total, lesdits échantillons étant conservés dans des tubes comportant un moyen d'identification de l'échantillon et étant de préférence fermés hermétiquement par un bouchon, et se caractérisant par le fait que successivement:
a) on place un dit tube dans une zone de stockage et on l'identifie par lecture de son dit moyen d'identification à l'aide d'un moyen de lecture approprié et enregistrement des informations relatives aux échantillons contenus dans ledit tube lues dans un automate de commande afin de connaître l'identité du patient et le type d'analyse à pratiquer sur l'échantillon de sang contenu dans ledit tube, ainsi qu'enregistrement de la position dudit tubes pour établir et programmer une cartographie électronique dans ladite zone de stockage, et
b) on prélève et on déplace individuellement ledit tube à l'aide de moyens de préhension et déplacement robotisés commandés et dirigés par ledit automate selon la cartographie électronique programmée depuis ladite zone de stockage vers au moins une zone de préparation du tube et de l'échantillon de sang, et
c) on prépare le dit tube et ledit échantillon dans ladite zone de préparation selon une séquence de préparation déterminée en fonction des
   informations lues sur ledit moyen d'identification de l'échantillon et/ou d'informations entrées dans ledit automate de commande par un opérateur, ladite séquence comprenant au moins une agitation du tube de manière à mélanger l'ensemble des constituants du sang contenu dans celui-ci, et
   moins une zone d'accès à un analyseur automatique sur sang total pour analyse de l'échantillon de sang contenu dans ledit tube, et
e) on extrait ledit tube dudit analyseur au niveau d'une dite zone d'accès après analyse et on le replace dans ladite zone de stockage à l'aide desdits moyens de préhension et de déplacement robotisés, et de préférence
f) on réitère les opérations b) à e) pour les autres échantillons.
   Conformément à une caractéristique préférée du procédé de l'invention, à l'étape a) lesdits tubes sont placés et maintenus verticalement dans des supports comportant une pluralité de logements individuels de format approprié à la réception d'un tube et organisés en une pluralité de rangées de logements contiguës, lesdits supports étant positionnés dans une dite zone de stockage apte à recevoir une pluralité de dits supports et accessible par lesdits moyens de préhension et de déplacement robotisés.

Pour s'assurer que l'analyse des échantillons de sang soit réalisée dans de bonnes conditions il convient également de veiller à ce qu'aucun élément ne perturbe les opérations de prélèvement du sang par l'analyseur automatique dans le tube. C'est pourquoi à l'étape c) on réalise préférentiellement l'une au moins des opérations de préparation supplémentaires suivante:
- on provoque une aération du tube, et
- on vérifie le niveau dudit échantillon de sang dans ledit tube, et
- on détermine l'existence de caillots éventuels dans l'échantillon contenu dans ledit tube, et
- on vérifie le niveau d'enfoncement du bouchon fermant ledit tube.

De façon complémentaire, on peut également dans certain cas, à l'étape c), réaliser également une mise en température, de préférence un chauffage, dudit échantillon.

Selon une autre caractéristique préférée du procédé de l'invention, à l'étape e) on trie et on range les tubes dans différents dits supports à l'aide desdits moyens de préhension et déplacement robotisés en fonction des résultats des analyses pratiquées sur les échantillons contenus dans lesdits tubes, ou en fonction de la place à optimiser dans les portoirs, ou encore en fonction d'analyses complémentaires sur lesdits échantillons.

Conformément aux législations nationales en vigueur dans la majorité des pays, il convient chaque jour de vérifier la précision des analyseurs automatiques avant de

Conformément aux législations nationales en vigueur dans la majorité des pays, il convient chaque jour de vérifier la précision des analyseurs automatiques avant de procéder à l'analyse d'échantillons de sang inconnu. C'est pourquoi selon l'invention on procède préalablement à la préparation et l'analyse des dits échantillons de sang total, à un contrôle de l'analyseur à l'aide d'échantillons de sang de contrôle, lesdits échantillons de sangs de contrôle étant conservés dans une zone réfrigérée accessible aux dits moyens de préhension et de déplacement robotisés, lesdits échantillons de sang de contrôle étant réchauffés et préparés comme un échantillon de sang total inconnu, puis introduits dans ledit analyseur et récupérés automatiquement et enfin replacé à leur emplacement de départ dans ladite zone réfrigérée par lesdits moyens de préhension et de déplacement robotisés.

Le cas échéant, pour satisfaire aux normes d'analyses en vigueur dans certains Etats et/ou appliquées dans certains laboratoires, on prépare périodiquement l'analyse d'au moins un échantillon de sang de contrôle après préparation et analyse d'un nombre déterminé d'échantillons de sang total dans un dit analyseur, ledit échantillon de sang de contrôle étant prélevé, préparé et amené à l'analyseur, puis récupéré et stocké par lesdits moyens de préhension et de déplacement robotisés.

Ainsi, de façon avantageuse, on vérifie ponctuellement et de façon automatique, au cours de la journée, que l'analyseur automatique utilisé pour les analyses n'est pas déréglé et qu'il présente toujours la précision et la fiabilité suffisantes pour garantir la validité des résultats d'analyses.

Conformément à une autre caractéristique avantageuse, le procédé de l'invention comprend un protocole de vérification automatique de la validité des résultats d'analyses effectuées par l'analyseur automatique. A cet effet selon l'invention:
- on effectue une moyenne de chacun des paramètres analysés sur une série d'échantillons de sang total inconnus d'un nombre déterminé, et
- on compare ces valeurs moyennes de paramètres analysés à des fourchettes de valeurs nominales de ces mêmes paramètres, valeurs nominales correspondant à des patients sains et étant enregistrées dans ledit automate de commande de commande, et
- si une desdites valeurs moyennes est située à l'extérieur de la plage de valeurs nominales du paramètre correspondant, on prépare un échantillon de contrôle et on effectue l'analyse de ce même paramètre sur cet échantillon de contrôle, et poursuit l'analyse d'une nouvelle série d'échantillons de sang total inconnus, et
- si la valeur du paramètre analysé sur le sang de contrôle est située à l'extérieur de la plage de valeurs nominales dudit paramètre, on réalise un calibrage dudit analyseur avant l'analyse d'une nouvelle série d'échantillons de sang total inconnus.

Ainsi, il est possible de détecter les éventuels déréglages de l'analyseur au fur et à mesure de la réalisation des analyses et de réaliser une vérification automatique (un contrôle de qualité) sans qu'un opérateur ait à s'en occuper, ou de détecter la présence d'échantillons de sang pathologiques dans une série d'échantillons donnée lorsqu'une ou plusieurs valeurs moyennes de paramètres mesurés sont situées à l'extérieur de la ou des plages de valeurs nominales correspondantes.

Lorsqu'en revanche la valeur de paramètre mesurée sur le sang de contrôle est située à l'extérieur de la plage de valeurs nominales, on procèdera alors à un calibrage de l'analyseur, c'est-à-dire à une correction de réglage de celui-ci, calibrage qui pourra être effectué par un opérateur à l'aide de tubes de sang de calibrage spéciaux.

Selon un second aspect, l'invention fournit également un dispositif automatique utile à la préparation d'analyses d'échantillons sanguins sur sang total selon le procédé de l'invention. Ce dispositif est **caractérisé en ce qu'**il comporte:
- au moins un compartiment constituant une dite zone de stockage des dits tubes avant et après analyse, et
- au moins un dit moyen de lecture desdits moyens d'identifications desdits tubes, et
- au moins une zone de préparation desdits échantillons sanguins avant analyse comportant des moyens de vérification et/ou de traitement desdits tubes contenant lesdits échantillons, notamment au moins un moyen d'agitation desdits tubes, et
- au moins une zone d'accès à au moins un analyseur automatique sur sang total, ladite zone d'accès permettant le placement d'un dit tube dans ledit analyseur, et
- des moyens de préhension et déplacement robotisés commandés par un automate de commande selon la cartographie électronique programmée et aptes à saisir et reposer lesdits tubes
   individuellement dans ladite zone de stockage et à les véhiculer dans au moins trois directions orthogonales XYZ entre ladite zone de stockage, ladite zone de individuellement dans ladite zone de stockage et à les véhiculer dans au moins trois directions orthogonales XYZ entre ladite zone de stockage, ladite zone de préparation et ladite zone d'accès au dit analyseur, ledit analyseur étant de préférence relié et/ou commandé par ledit automate de commande.

De façon avantageuse, ledit dispositif comporte des dits supports comportant des logements individuels dans lesquels lesdits tubes sont placés par un opérateur, lesdits supports étant positionnés dans ladite zone de stockage et amovibles manuellement de celle-ci, ladite zone de stockage étant apte à recevoir une pluralité des dits supports et étant accessible par lesdits moyens de préhension et déplacement robotisés pour prélever puis y replacer les tubes contenant les échantillons de sang total à analyser.

Dans un mode de réalisation avantageux, le dispositif de l'invention comporte un compartiment de traitement en urgence accessible manuellement à un opérateur depuis l'extérieur du dispositif, ledit compartiment de traitement en urgence étant également accessible aux dits moyens de préhension et déplacement robotisés et comportant au moins un élément de support de tubes comportant au moins un logement apte à recevoir un tube de sang.

Ce compartiment de traitement en urgence permet l'introduction ou le retrait d'un tube de sang à n'importe quel moment dans la chaîne d'analyse sans avoir à arrêter le dispositif de préparation ni les analyses en cours, ce qui facilite la préparation et l'analyse de tubes de sang à analyser en priorité lorsque ceux-ci ne sont pas dans le dispositif.

Selon une caractéristique préférée, lesdits moyens de vérification et/ou de traitement comportent au choix:
- au moins un dispositif de contrôle d'aération desdits tubes, et/ou
- au moins un moyen de détection du niveau de sang dans un dit tube et de la présence éventuelle de caillots dans ce sang,
   et /ou
- au moins un moyen de un moyen de vérification du niveau d'enfoncement du bouchon desdits tubes de sang, et/ou
- au moins un moyen de chauffage desdits tubes, de préférence constitué de cellules thermoélectriques.

Dans un mode de réalisation avantageux, le dispositif de préparation de l'invention comporte un compartiment de stockage et de conservation de tubes de sang de contrôle permettant la vérification desdits analyseurs, ledit compartiment comportant des moyens de refroidissement desdits tubes.

Selon une autre caractéristique préférée, lesdits tubes de sang de contrôle sont positionnés et maintenus dans ledit compartiment de conservation dans des logements individuels d'un dit support, lesdits moyens de refroidissement étant constitués par des cellules thermoélectriques (cellules à effet Peltier) disposées de préférence dans lesdits logements ou sur la périphérie de ceux-ci.

L'intégration d'un compartiment de stockage de sang de contrôle dans le dispositif de préparation de l'invention permet avantageusement d'adapter les processus de préparation des tubes et d'analyse aux réglementations nationales et/ou des procédures internes aux laboratoires d'analyses. Avec cette disposition, toutes les opérations de contrôle de qualité, notamment la vérification des analyseurs, peuvent être réalisées de façon automatique et rigoureuse sans que l'opérateur ait à s'en charger afin de garantir la sécurité des résultats.

Conformément à une autre caractéristique avantageuse du dispositif de l'invention, lesdits moyens de préhension et déplacement robotisés comportent une pince articulée adaptée pour saisir lesdits tubes, de préférence sous la base du bouchon, ladite pince étant mobile en translation verticalement et horizontalement selon trois axes orthogonaux XYZ par l'intermédiaire d'un dispositif translateur comportant au moins trois rails de guidage dirigés selon lesdits axes XYZ et solidaires deux à deux, un premier rail horizontal fixe supportant un second rail horizontal perpendiculaire au dit premier rail et étant mobile en translation sur celui-ci, un dernier rail vertical étant solidaire dudit second rail et mobile en translation sur celui-ci et perpendiculairement à celui-ci, ladite pince étant solidaire dudit troisième rail.

Dans un mode de réalisation particulier des moyens de préhension et de déplacement robotisés, ceux-ci comportent un bras articulé muni à une de ses extrémités d'une pince de préhension desdits tubes de sang, par exemple de type robot multi-axes.

Pour préserver l'environnement dans lequel sont manipulés et préparés les tubes de sang à analyser ainsi que les tubes de sang de contrôle conservés dans le dispositif de préparation de l'invention et pour protéger l'ensemble des éléments de celui-ci ainsi que les tubes de sang, notamment des chocs, vibrations et autres agressions externes, ledit dispositif de préparation est confiné dans une enceinte de protection comportant au moins une première ouverture d'accès à au moins un dit analyseur et une seconde ouverture d'accès au dit compartiment de traitement en urgence. En outre, une telle enceinte de protection améliore également la sécurité des opérateurs vis-à-vis des risques de projections et/ou de dysfonctionnement du dispositif.

Pour faciliter la mise à disposition des tubes de sang à analyser à l'analyseur depuis ledit dispositif de préparation, la (les) dite(s) zone(s) d'accès au(x) dit(s) analyseur(s) comporte(nt) avantageusement un chariot mobile apte à se déplacer entre ledit dispositif et un dit analyseur, ledit chariot étant commandé par ledit automate de commande et comportant au moins un logement apte à recevoir un dit tube de sang par lesdits moyens de préhension et de déplacement.

Dans un mode particulier de réalisation de l'invention, lesdits moyens de lecture desdits moyens d'identifications des tubes sont solidaires desdits moyens de préhension et de déplacement robotisés, et de préférence solidaire de ladite pince.

Bien qu'ils soient commandés et dirigés directement par un automate de commande selon une cartographie électronique du dispositif, programmée et enregistrée dans ledit automate de commande, lesdits moyens de préhension et déplacement robotisés comportent également dans un mode de réalisation particulier de l'invention des moyens de détection et/ou de visualisation desdits tubes contenant lesdits échantillons sanguins et desdits tubes de sang de contrôle dans lesdites zones des stockage, zone de préparation, zone(s) d'accès au(x) dit(s) analyseur(s), dans ledit compartiment de traitement en urgence et dans ledit compartiment de stockage et de conservation des tubes de sangs de contrôles.

Ces moyens de détection et/ou de visualisation permettent avantageusement de vérifier la présence d'un tube dans un emplacement déterminé des supports de tubes dans la zone de stockage, dans le compartiment de traitement en urgence ou dans le compartiment de conservation de tubes de contrôle et ainsi de signaler au programme de commande un emplacement vide pour qu'il en tienne compte par la suite ou bien tout simplement d'ajuster l'alignement de la pince de préhension avec le tube pour assurer une bonne saisie et un bon déplacement de celui-ci dans le dispositif.

Afin de faciliter le cas échéant le stockage des échantillons déjà analysés en vue d'une analyse postérieure de vérification, lesdits supports disposés dans ladite zone de stockage et/ou dans ledit compartiment de stockage et de conservation des tubes de sang de contrôle comportent également un moyen d'identification apte à être lu par des moyens de lecture appropriés.

Le dispositif de préparation de l'invention pourra également de façon avantageuse être couplé à un analyseur automatique afin de constituer un système d'analyse automatisé complet intégrant toute les fonctions de préparation des tubes à analyser, et de contrôle de qualité de l'analyseur, ledit analyseur comportant un moyen de prélèvement, en particulier une aiguille, d'un échantillon de sang à analyser contenu dans un tube fermé hermétiquement par un bouchon présenté à lui depuis le dispositif de préparation au niveau d'une dite zone d'accès de celui-ci.

D'autres caractéristiques de l'invention ressortiront à la lecture de la description détaillée qui va suivre, faite à titre non limitatif et en référence aux dessins annexés dans lesquels:
- la figure 1 représente en perspective et schématiquement le dispositif de préparation d'analyses d'échantillons de sang total selon l'invention;
- la figure 2 représente le dispositif de la figure 1 en vue de dessus,
- la figure 3 représente une vue partielle des moyens de préhension et de déplacement robotisés du dispositif de l'invention associés à un moyen de lecture de code-barres d'identification des échantillons,
- la figure 4 représente schématiquement un dispositif d'analyse automatisé incorporant un dispositif de préparation d'analyses selon l'invention coopérant avec deux analyseurs automatique d'échantillons de sang total.

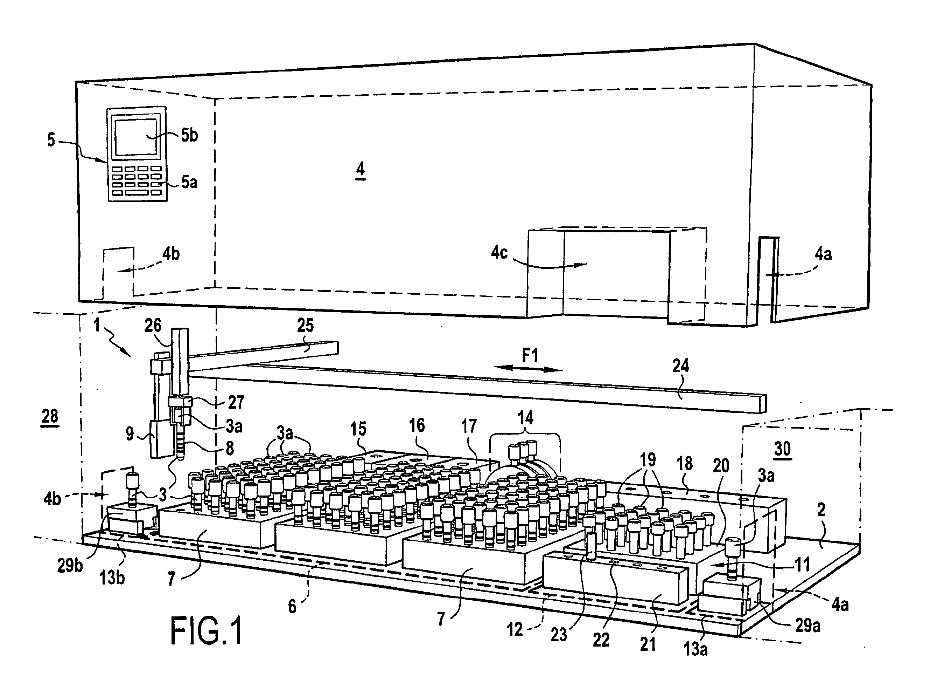

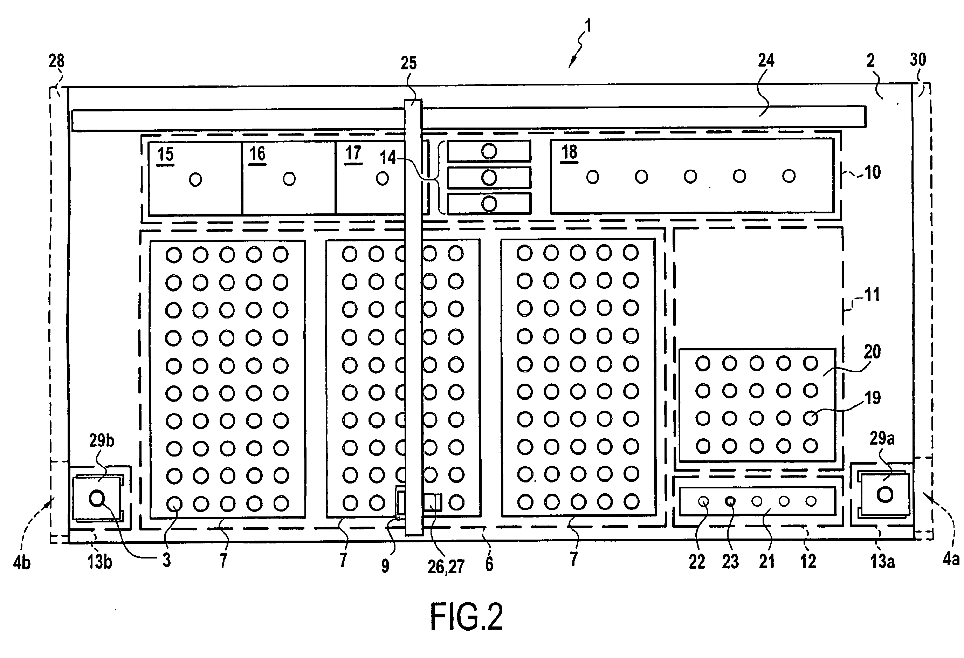

Par référence tout d'abord aux figures 1 et 2, le dispositif de préparation 1 d'analyses d'échantillons de sang total selon l'invention comporte dans le mode de réalisation représenté, un tablier de travail 2 sur lequel sont délimitées et réparties une pluralité de zones de traitement d'échantillons de sang contenus dans des tubes 3 comportant un moyen d'identification 8 de l'échantillon qu'ils contiennent et étant fermés hermétiquement par des bouchons 3a. Ce tablier de travail 2 est recouvert d'une enceinte de protection et d'isolation 4 comportant des évidements 4a, 4b, 4c d'accès à certaines zones du dispositif ainsi qu'un automate de commande 5 du dispositif. Ledit automate de commande est relié à un clavier d'entrée 5a et un écran tactile 5b permettant la communication d'un opérateur avec le dispositif via une interface homme-machine.

Dans une variante de réalisation, un ordinateur annexe au dispositif et relié à celui-ci pourra constituer ledit automate de commande de façon bien connue de l'homme du métier.

Les tubes de sang 3 sont destinés à être analysés dans un analyseur automatique après avoir été préparés à l'analyse dans le dispositif 1. Un tel analyseur automatique comporte de façon connue des moyens de prélèvement aptes à percer les bouchons 3a des tubes 3 pour y prélever une quantité de sang nécessaire et suffisante aux analyses à pratiquer ou à la réalisation d'un frottis sanguin si l'analyseur comporte un étaleur de lames.

Le dispositif de préparation d'analyse 1 regroupe en une seule et même unité l'ensemble des moyens adaptés à la préparation des tubes de sang 3 avant leur introduction dans l'analyseur afin de supprimer l'ensemble des opérations manuelles fastidieuses pratiquées à ce jour par les opérateurs pour la préparation et la mise en oeuvre des analyses sur sang total et leur laisser ainsi plus de temps pour la validation biologique des résultats.

A cet effet, le dispositif de préparation de l'invention comporte sur le tablier de travail 2 un compartiment définissant une zone de stockage 6 des tubes de sang à analyser, dans laquelle lesdits tubes sont disposés sur des supports 7 de capacité multiple comportant une pluralité de logements, en pratique de l'ordre de 25 à 100 logements selon les dimensions desdits supports. Lesdits logements présentent un format et une profondeur adaptés à la réception et au maintien des tubes de sang 3 dans une position verticale. De tels supports 7 sont traditionnellement utilisés dans les laboratoires d'analyses pour y reposer les tubes de sang et sont connus sous le nom de "portoirs" d'échantillons.

Le compartiment de stockage 6 présente une capacité variable en fonction du volume d'analyses à réaliser quotidiennement. Dans l'exemple représenté sur les figures, il reçoit trois portoirs 7 d'une capacité de cinquante tubes mais pour des laboratoires de taille petite à moyenne, il pourra par exemple recevoir de un à deux portoirs 7 ou, pour des laboratoires de taille et d'activité plus importante ou pour les hôpitaux, cinq portoirs ou plus.

Afin d'offrir encore plus de modularité et d'adaptabilité, ledit compartiment de stockage peut avantageusement être constitué, dans un mode de réalisation particulier par un ou plusieurs tiroirs (non représentés) que l'on tire pour charger et décharger les portoirs 7 dans le dispositif de préparation 1. Les portoirs 7 comportent également de préférence des fixations ou des moyens d'adhérence sur le fond du compartiment de stockage, non représentés, permettant de les maintenir en place pendant les opérations de manipulation des tubes 3 comme il sera décrit plus après.

Selon les cas, on peut introduire dans le compartiment de stockage 6 des portoirs 7 entièrement remplis de tubes 3 à analyser, des portoirs vides, ou encore des portoirs partiellement remplis. Ainsi, lorsque tous les portoirs 7 sont remplis, chaque tube 3 est préparé par le dispositif 1, puis introduit dans un analyseur automatique pour analyse et remis en place après analyse dans le compartiment de stockage 6 dans le logement du portoir 7 dans lequel il était rangé au départ.

Si en revanche on place dans le compartiment de stockage 6 des portoirs pleins et des portoirs vides, il est possible à l'opérateur de régler le dispositif 1 via ledit automate de commande 5 de celui-ci pour qu'il prélève les tubes 3 dans les portoirs 7 pleins et qu'il les replace après analyse dans les portoirs 7 vides, soit de façon aléatoire, soit en les triant et les regroupant en fonction des résultats d'analyse sur différents portoirs qui pourront être identifiés par la suite par un opérateur.

Si enfin on introduit dans le compartiment de stockage des portoirs 7 partiellement remplis de tubes, le dispositif permet, à la demande de l'opérateur, d'optimiser le rangement des tubes dans les portoirs 7 en regroupant les tubes 3 en fin d'analyse sur un minimum de portoirs, afin d'économiser le nombre de portoirs utilisés pour la conservation des tubes de sang et par conséquent la place dans les réfrigérateurs où sont stockés les tubes après analyses pendant un jour ou deux.

De façon avantageuse, lesdits portoirs sont équipés de moyens d'identification 8a tels qu'un marqueur d'identification par radiofréquence, une bande ou étiquette magnétique ou un code-barres permettant la lecture et/ou l'écriture d'informations relatives aux tubes 3 placés dans les portoirs 7. Les tubes 3 et les portoirs 7 ainsi repérés pourront être plus facilement récupérés en cas de demande de nouvelle analyse. Ces informations peuvent être lues et enregistrées de façon avantageuse par un lecteur 9a approprié, tel qu'un transpondeur radiofréquence ou un lecteur de code-barres, mobile dans le compartiment de stockage 6 en regard desdits moyens d'identification et connecté à l'automate de commande 5.

De même les tubes de sang 3 comportent également chacun un moyen d'identification 8 de l'échantillon sanguin qu'il contient. Ce dit moyen d'identification est constitué d'un code-barres ou d'un marqueur radiofréquence (RFID) par exemple et est lu par l'intermédiaire d'un lecteur approprié 9 dès après la mise en place des tubes dans le compartiment de stockage. Ceci permet de déterminer la position de chacun des tubes dans ledit compartiment de stockage 6 mais également d'établir automatiquement un listage des tubes présents dans le dispositif et des analyses qu'ils vont subir, ce qui détermine la préparation que chacun des dits tubes devra subir.

Si les codes-barres sont traditionnellement utilisés dans le domaine des analyses sanguines comme dans beaucoup d'autres domaines, l'identification par radiofréquence (RFID) est une technique particulièrement bien adaptée pour stocker et récupérer des données relatives aux échantillons sanguins. Les marqueurs utilisés pourront notamment être des étiquettes autoadhésives 8, 8a, qui peuvent être collées ou incorporées dans les tubes, et lus et mis à jour automatiquement par le lecteur 9, 9a à chaque prise en charge des tubes.

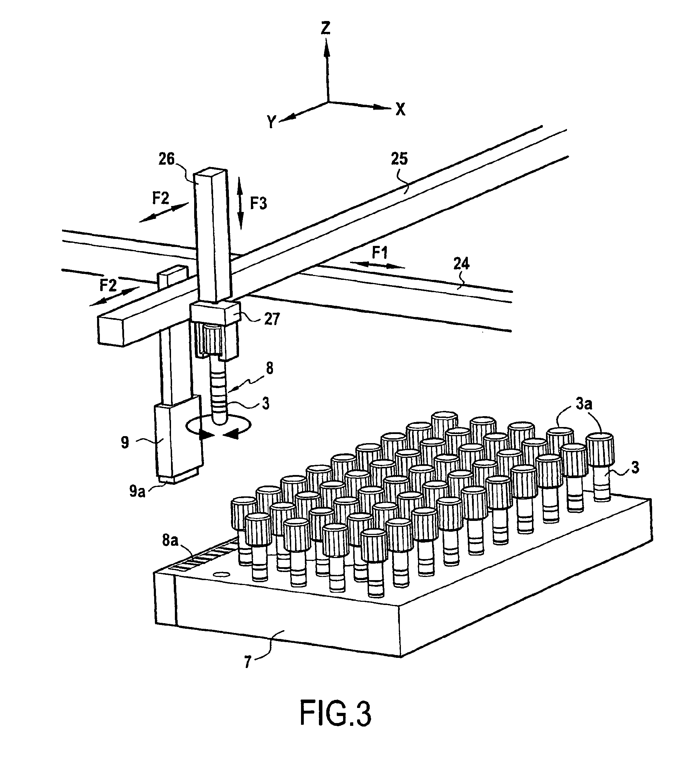

Dans un mode de réalisation avantageux, le lecteur 9 des moyens d'identification 8 des tubes et le lecteur 9a des moyens d'identifications 8a des portoirs 7 pourront être contiguës l'un de l'autre sur un même dispositif de lecture comme représenté à la figure 3, permettant ainsi une lecture simultanée du moyen d'identification 8 d'un tube prélevés par la pince 27 et du moyen d'identification 8a du portoir 7 dans lequel ce tube 3 a été prélevé.

Afin de réaliser la préparation des échantillons de sang contenus dans les tubes 3, le dispositif 1 comporte également une zone de préparation ou module de pré-analytique 10. De façon complémentaire, il comporte également un compartiment 11 de conservation de tubes de sang de contrôle 19, un compartiment de traitement en urgence 12 communiquant avec l'extérieur du dispositif par une ouverture 4c dans l'enceinte 4 du dispositif et au moins une zone ou compartiment d'accès 13a, 13b à un analyseur automatique par lequel les tubes de sang à analyser ou les tubes de sang de contrôles sont mis à disposition de l'analyseur au niveau de deux ouvertures 4a, 4b dans l'enceinte 4 après préparation pour prélèvement et analyses.

La disposition des différentes zones, modules ou compartiments du dispositif sur le tablier de travail 2 peut être variable. Toutefois il convient de veiller à conserver une certaine proximité entre le compartiment de stockage 6, le module de pré-analytique 10 et les zones d'accès 13a, 13b à l'analyseur afin que les temps de transfert des tubes de sang 3 entre ces éléments soient minimisés et garantir ainsi la fiabilité et l'efficacité de la préparation des échantillons à analyser et des analyses postérieures sur ceux-ci.

Le module de pré-analytique 10 comporte une pluralité de moyens de préparation et/ou de traitement des échantillons de sang à analyser, commandés par ledit automate de commande 5 et par lesquels est conduite de manière automatique une séquence de préparation des échantillons déterminée en fonction des informations lues sur ledit moyen d'identification 8 des tubes 3 et/ou des informations entrées dans ledit automate de commande par l'opérateur chargé de l'analyse desdits échantillons.

Au cours de cette séquence de préparation sont réalisées les opérations de vérification et de conditionnement des échantillons et/ou des tubes 3 les contenant et notamment l'agitation des tubes avant analyse. L'agitation des échantillons de sang total est en effet primordiale avant toute analyse, pour bien remettre en suspension toutes les cellules du sang avant prélèvement par l'analyseur.

A cet effet, le module de pré-analytique comporte un agitateur 14, de préférence rotatif, comportant trois roues d'agitation comprenant un logement d'insertion du tube à agiter et montées sur un arbre de rotation commun, permettant d'agiter simultanément trois tubes de sang dans l'exemple des figures 1 et 2.

Les roues de l'agitateur peuvent être couplées en rotation ou non, afin de permettre une dissociation de la rotation de chaque roue de l'agitateur et ainsi une augmentation de la cadence du dispositif en permettant la mise en place et la saisie de tubes de sang dans une roue sans arrêter l'agitation des autres roues.

Toutefois, il est en effet également possible de réaliser une agitation par retournement partiel des tubes ou même une agitation de type VORTEX à l'aide de moyens aptes faire tourner le tube sur lui-même, ces modes et moyens d'agitation étant bien connus de l'homme de l'art dans le domaine des analyses sanguines. De même, le nombre de logements d'agitation peut être choisi, comme la capacité du compartiment de stockage, en fonction de la cadence des analyses à effectuer.

Le module de pré-analytique comporte également un dispositif 15 d'aération desdits tubes, comportant une aiguille de perçage du bouchon du tube permettant de neutraliser une dépression ou une pression résiduelle dans le tube afin que l'analyseur puisse prélever correctement le sang dans le tube.

En outre, il est également avantageux d'adjoindre à l'agitateur 14 et au dispositif 15 d'aération des tubes un dispositif 16 de détection du niveau de sang dans les tubes et de la présence de caillots dans le sang tel qu'un détecteur optique muni d'un dispositif d'émission-réception d'ondes lumineuses par exemple. De préférence, le module de pré-analytique comporte également un dispositif 17 de contrôle du niveau d'enfoncement du bouchon des tubes et, le cas échéant, un dispositif de chauffage 18 desdits tubes 3 pour porter certains échantillons à température d'analyse idéale dans le cas de certaines pathologies de sang ou lorsque lesdits échantillons de sang sortent du réfrigérateur. De façon avantageuse, ces moyens de chauffage sont de préférence constitués de cellules thermoélectriques, par exemple des cellules à effet Peltier, qui peuvent ainsi selon la polarité du courant avec lequel elles sont alimentées soit réchauffer soit refroidir lesdits échantillons.

Le dispositif de préparation 1 comporte également, conformément à une autre caractéristique avantageuse de celui-ci, un compartiment 11 de stockage et de conservation de tubes de sang de contrôle 19, c'est-à-dire de tubes de sang utiles quotidiennement à la vérification des analyseurs automatiques de sang total, ledit compartiment comportant des moyens de refroidissement desdits tubes. Dans ce compartiment 11 qui, contrairement à ce qui est représenté sur les figures pour des raisons de clarté, est de préférence isolé, lesdits tubes de sang de contrôle 19 sont positionnés et maintenus dans les logements individuels d'un support métallique 20 équipé de cellules thermoélectriques (cellules à effet Peltier) dans lesdits logements ou sur la périphérie de ceux-ci afin de maintenir au froid les tubes de sang de contrôle 19 et ainsi garantir leur bonne conservation dans le temps.

Le dispositif de préparation comporte enfin une zone ou un compartiment de traitement en urgence 12 accessible par un opérateur depuis l'extérieur du dispositif au travers d'une ouverture 4c dans l'enceinte du dispositif 1 sans avoir à arrêter la préparation et l'analyse des échantillons de sang total contenus dans le compartiment de stockage 6.

Ce compartiment de traitement en urgence 12 est destiné à la gestion de toutes les situations d'analyses en urgence ou d'analyses non conventionnelles qui habituellement perturbent le bon fonctionnement des analyseurs. Ceci est par exemple le cas pour des tubes équipés d'un bouchon non perçable par l'aiguille de l'analyseur, qui sont débouchés avant mise à disposition de l'analyseur, ou encore pour des tubes de format inférieur, habituellement utilisés pour prélever du sang sur des enfants, et qui nécessitent un adaptateur pour pouvoir être ensuite introduits dans l'analyseur automatique.

Un portoir 21 de faible capacité, comportant au maximum une dizaine de logements 22, est placé dans ledit compartiment de traitement en urgence 12 pour recevoir un ou plusieurs tubes 23 mis en place directement par l'opérateur manuellement dans lesdits logements 22 du portoir 21 pour que le dispositif de préparation les prenne en charge individuellement et prioritairement sur les tubes de sang 3 rangés dans le compartiment de stockage 6.

Les logements 22 peuvent aussi servir à mettre à la disposition de l'opérateur un tube de sang 3 préalablement placé dans le compartiment de stockage 6 sans interrompre la chaîne d'analyse automatique. L'opérateur peut ainsi très facilement et sans danger récupérer un tube précis afin, par exemple, de faire des analyses complémentaires.

Afin de manipuler les tubes de sang placés sur les supports 7 dans le compartiment de stockage 6 ou dans le portoir 21 du compartiment de traitement en urgence 12 et de les déplacer ensuite individuellement à l'intérieur du dispositif vers les moyens de préparation et de vérification du module de pré-analytique puis vers un analyseur via une zone d'accès à celui-ci, ledit dispositif comporte de façon avantageuse des moyens de préhension et déplacement robotisés 24, 25, 26, 27 commandés par ledit automate de commande 5.

Ils comportent en particulier une pince articulée 27 adaptée pour saisir lesdits tubes 3, 19, 23 de préférence sous la base du bouchon, ladite pince 27 étant mobile en translation verticalement et horizontalement grâce à un dispositif translateur comportant au moins trois rails de guidage motorisés 24, 25, 26 selon trois axes orthogonaux XYZ et solidaires deux à deux, un premier rail 24, horizontal et fixe, s'étendant de part en part du tablier 2 dans sa plus grande dimension et supportant un second rail 25, également horizontal et perpendiculaire au dit premier rail 24. Ce second rail 25 est mobile en translation sur ledit premier rail selon la double flèche F1, et un dernier rail 26 vertical est solidaire dudit second rail 25 et mobile en translation horizontale selon la double flèche F2 sur celui-ci ainsi qu'en translation verticale selon la double flèche F3 perpendiculairement à celui-ci, ladite pince 27 étant solidaire de ce troisième rail 26

Dans une variante de réalisation préférée représentée en détail à la figure 3, ladite pince 27 est montée rotative sur ledit troisième rail 26 de manière à pouvoir pivoter autour d'un axe vertical parallèle à l'axe Z. Dans cette configuration, la pince 27 permet de saisir un tube 3 et de le mettre en rotation sur lui-même, ce qui s'avère particulièrement intéressant afin d'effectuer un lecture individuelle du moyen d'identification 8 (un code-barres sur les figures) de chaque tube placé dans les portoirs 7, 21 du compartiment de stockage 6 ou du compartiment de traitement en urgence 12 à l'aide d'un lecteur 9 associé à ladite pince rotative 27 comme représenté à la figure 3. En effet, la rotation du tube permet de trouver rapidement une zone du moyen d'identification non masquée par les mors de la pince 27 pour effectuer la lecture et l'enregistrement des données lues dans l'automate de commande de commande sans avoir à déplacer le tube le long des rails translateurs vers un lecteur fixe à une position déterminée dans le dispositif. On gagne ainsi un temps important dans la phase d'amorçage de la préparation des échantillons sanguins à analyser.

Le fonctionnement du dispositif de préparation 1 de l'invention va maintenant être présenté, le dispositif étant associé pour l'exemple à un analyseur automatique 28 identifié par une paroi latérale sur la figure 1, ledit analyseur 28 étant relié et apte à communiquer via un module réseau non représenté à l'automate de commande 5 du dispositif de préparation 1.

Après une phase de mise en route de l'analyseur 28 et du dispositif de préparation 1, qui se déroule le matin avant le début des analyses et au cours de laquelle des contrôles mécaniques et électroniques de l'instrument, ainsi que des rinçages et amorçages de liquides et des réactifs d'analyse sont réalisés, on déclenche depuis l'automate de commande 5 une phase de vérification, aussi appelée "contrôle de qualité", phase qui est obligatoire et est gérée de façon entièrement automatique et autonome par le dispositif de préparation.

Comme cela a été indiqué plus haut, les tubes de sang de contrôle 19 sont conservés dans le compartiment de conservation 11 du dispositif de préparation 1. Ceci présente l'avantage que le choix des tubes de sang de contrôle ainsi que les règles de contrôle et de validation, qui sont paramétrables par l'utilisateur afin de s'adapter à la législation en vigueur dans chaque pays ou en fonction du laboratoire, sont gérés par le dispositif de préparation. L'automatisation des tâches permet de respecter strictement les conditions d'utilisation des sangs de contrôle. Ces conditions concernent principalement la date de péremption, les conditions de stockage, le nombre de prélèvements maximum que l'on peut effectuer dans un tube déjà utilisé et les conditions de remise en température et d'agitation.

Dans cette phase de contrôle de qualité, la pince robotisée 27 sélectionne le tube de sang de contrôle 19 à analyser dans le compartiment de conservation 11 du dispositif de préparation et le dépose dans le dispositif de chauffage 18 pour accélérer la remise en température puis dans l'agitateur 14 pour homogénéiser le sang contenu dans le tube. Le cas échéant, on pourra utiliser des agitateurs chauffants pour bénéficier du phénomène d'agitation pour accélérer le réchauffage des tubes de sang de contrôle.

Le tube de sang de contrôle 19 est ensuite déposé par la pince robotisée 27 dans le chariot 29b dans la zone d'accès 13b afin d'être introduit dans l'analyseur 28 et analysé.

Le tube de sang de contrôle 19 une fois analysé est ensuite transporté depuis l'analyseur 28 vers le dispositif de préparation 1 par l'intermédiaire du chariot 29b, puis vers son emplacement d'origine dans le compartiment de conservation 11 par la pince robotisée 27.

Pour s'assurer que la vérification est réalisée sur un tube de contrôle 19 approprié, dont la date de péremption et le nombre d'analyses déjà effectuées ne sont pas dépassés, on procède à la lecture du moyen d'identification 8 du tube de sang de contrôle 19 lors de sa prise en charge par la pince robotisée 27 pour déceler une éventuelle inversion accidentelle des tubes de contrôle 19 dans le compartiment de conservation 11.

Les résultats sont ensuite affichés sur l'écran de contrôle 5b de l'automate de commande 5 et enregistrés et archivés dans celui-ci. Ceci permet de vérifier automatiquement les résultats d'un contrôle et si ces résultats sortent des limites de tolérance, de procéder à une nouvelle analyse du même tube de sang de contrôle ou d'un nouveau tube disponible dans le compartiment de conservation réfrigéré et ce jusqu'à obtenir des résultats corrects.

Après validation du contrôle de qualité, on peut procéder au traitement des tubes de sang total 3 à analyser. Ces tubes sont disposés dans des portoirs 7 installés par l'opérateur directement dans le compartiment de stockage 6 du dispositif de préparation.

Une fois les portoirs 7 chargés dans le dispositif 1, l'opérateur lance le processus d'analyse des échantillons depuis l'automate de commande 5. Dans un premier temps, la pince 27 va venir prélever un tube de sang 3 à analyser dans un portoir 7 dans le compartiment de stockage 6, le sortir de son logement puis lire le code-barres ou le marqueur radiofréquence qui lui sert de moyen d'identification 8 pour transmettre à l'automate de commande 5 la position du tube dans le portoir 7.

La pince 27 déplace ensuite le tube 3 depuis le compartiment de stockage 6 vers le module de pré-analytique 10 pour y débuter la préparation de l'échantillon. La pince robotisée 27 amène tout d'abord le tube 3 au niveau du dispositif 15 d'aération du tube, puis la pince robotisée amène ensuite le tube au niveau du détecteur optique 16 pour vérifier le niveau de sang dans le tube et l'éventuelle présence de caillots. Si cette vérification est validée, le tube 3 est ensuite transporté par la pince robotisée 27 vers le poste 17 de vérification du niveau d'enfoncement du bouchon du tube. Si celui-ci est correct, la pince vient ensuite placer le tube dans l'agitateur 14 pour qu'il y subisse une phase d'agitation soutenue, effectuée selon les recommandations du NCCLS (Normes et réglementations promues par "*The Clinical and Laboratory Standards Institute*").

Une fois cette agitation terminée; et si aucun chauffage du sang n'est nécessaire préalablement à l'analyse, la pince 27 extrait alors le tube de sang à analyser de l'agitateur 14 et le transporte vers une zone d'accès 13a, 13b à l'analyseur où elle dépose le tube 3 dans un chariot translateur 29a, 29b équipé d'un support apte à maintenir le tube dans une position appropriée à son entrée dans l'analyseur et au prélèvement dans ce dernier d'une quantité de sang suffisante à l'analyse. Une fois le tube déposé dans le chariot, celui-ci pénètre dans l'analyseur par l'ouverture pratiquée à cet effet dans la paroi mitoyenne de l'enceinte du dispositif de préparation et de l'analyseur jusqu'au poste de prélèvement de l'analyseur pour analyse de l'échantillon contenu dans le tube.

Lorsque le prélèvement du sang dans le tube est effectué par l'analyseur, le chariot revient ensuite à sa position de départ dans le compartiment d'accès du dispositif de préparation où la pince robotisée 27 vient à nouveau saisir le tube et le transporter jusqu'à son emplacement de départ dans un portoir 7 dans le compartiment de stockage.

Selon les choix de l'opérateur, il est également possible de programmer la pince robotisée 27 pour que les tubes de sang total ne soient pas replacés à leur place d'origine après analyse mais déposés dans un autre portoir 7, vide, dans le compartiment de stockage 6 du dispositif de préparation, ou encore triés en fonction du résultat de l'analyse effectuée dans différents portoirs vides prévus à cet effet dans le compartiment de stockage. La fonction de tri des tubes est notamment avantageuse en ce qu'elle permet de regrouper tous les tubes nécessitant un examen complémentaire dans un seul et même portoir 7 pour éviter à l'opérateur d'effectuer lui même une opération de tri manuelle.

Pour des raisons de cadence d'analyses à réaliser dans le laboratoire, les opérations de préparation des échantillons, notamment l'agitation, sont effectuées de préférence simultanément sur plusieurs tubes comme représenté à la figure 1. L'automate de commande 5 gère les différents déplacements des tubes par la pince robotisée 27 de façon à optimiser la durée de l'agitation et le temps d'attente qui doit être minimum entre la fin de l'agitation et l'analyse.

Toujours pour améliorer la cadence des analyses, il est avantageux que les chariots de transport des tubes à l'analyseur comportent une pluralité de logements pour recevoir plusieurs tubes de sang à analyser avant de pénétrer dans l'analyseur, de manière à anticiper légèrement le chargement du tube à analyser et à laisser du temps à l'automate pour récupérer le tube restitué par l'analyseur.

Notamment, il n'y a pas d'urgence à récupérer un tube analysé afin de le remettre à sa place. Le portoir peut ainsi contenir le tube à analyser et un ou plusieurs tubes déjà analysés. Cette disposition permet d'optimiser les déplacements de la pince et de garder une cadence élevée.

Le dispositif de préparation de l'invention permet également de gérer les cas où un opérateur doit réaliser des analyses en urgence sur des tubes de sang 3 présents dans le compartiment de stockage 6 du dispositif 1 ou sur des tubes 23 provenant de l'extérieur qu'il n'était pas prévu d'analyser. Cette situation est très courante mais difficile à gérer dans un laboratoire très automatisé où il faut interrompre les analyses en cours pour passer le ou les tubes considérés en urgence.

Grâce à la pince robotisée 27, équipée d'un lecteur d'identification 9 comme représenté sur la figure 3, il est particulièrement facile et rapide de retrouver un tube 3 placé dans le compartiment de stockage 6 et de le traiter en priorité et en toute sécurité sans ralentir la cadence du dispositif et sans intervention manuelle de l'opérateur.

De même, si le tube 23 à analyser en urgence n'est pas dans le compartiment de stockage du dispositif, l'opérateur peut placer celui-ci dans le portoir 21 dans le compartiment de traitement en urgence 12 et programmer, via le clavier 5a ou l'écran tactile 5b de l'automate de commande 5, la prise en charge de ce tube par la pince robotisée 27 en priorité sur les tubes situés dans le compartiment de stockage 6 afin d'effectuer l'analyse en urgence de ce tube sans rompre l'automatisme de la chaîne d'analyse.

Ainsi le compartiment de traitement en urgence 12 donne un accès privilégié à l'opérateur pour réaliser toutes les opérations exceptionnelles et non automatisables, ainsi que pour récupérer un tube 3 présent à l'intérieur du dispositif, que la pince robotisée peut aisément aller chercher et venir mettre à disposition dans le portoir 21 dans le compartiment de traitement en urgence 12.

Le dispositif de préparation 1 de l'invention permet également une grande modularité d'installation dans les laboratoires d'analyses en combinaison avec les différentes catégories d'analyseurs automatiques traditionnellement employés dans ces laboratoires.

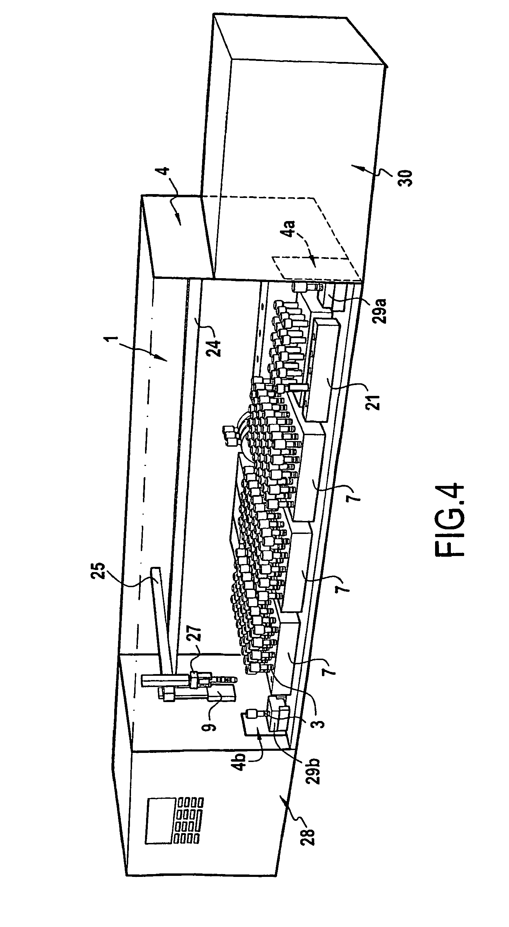

Comme le montre la figure 4 il est ainsi possible de coupler au dispositif de l'invention 1 deux analyseurs 28, 30. Dans une application dédiée à l'hématologie, l'analyseur 28 est préférentiellement un compteur de cellules et l'analyseur 30 est préférentiellement un automate permettant de faire des frottis sanguins et de colorer spécifiquement les cellules étalées afin de faciliter une observation ultérieure au microscope.

Dans cette configuration le dispositif 1, intercalé entre les analyseurs 28 et 30 vient positionner le tube 3 à analyser dans le chariot 29b de la zone d'accès 13b de l'analyseur 28 et le tube 3 nécessitant un frottis sanguin dans le chariot 29a de la zone d'accès 13a de l'automate 30.

La demande de frottis sanguin étant le plus souvent liée au résultat de l'analyseur, on voit que cette configuration permet d'attendre le résultat de l'analyseur pour choisir de remettre le tube 3 à sa place dans un portoir 7 ou de le déposer dans le chariot 29a pour effectuer le frottis. Selon la durée de l'analyse ou la disponibilité du dispositif de préparation 1, il peut être nécessaire de mélanger le sang en positionnant le tube 3 sur l'une des roues de l'agitateur 14 avant de le déposer sur le chariot 29a de l'automate 30.

D'autres combinaisons sont possibles et, notamment, le couplage d'un analyseur et d'un autre automate effectuant des analyses sur sang total utiles au diagnostique d'une pathologie comme, par exemple, le dosage de la C.R.P (Protéine C- Réactive) ou la vitesse de sédimentation.

## Revendications

1. Procédé de préparation d'analyses d'échantillons de sang total, lesdits échantillons étant conservés dans des tubes (3, 19, 23) comportant un moyen d'identification (8) de l'échantillon et étant de préférence fermés hermétiquement par un bouchon (3a), **caractérisé en ce que** successivement :
a) on place un dit tube (3, 19, 23) dans une zone de stockage (6, 11, 12) et on identifie le dit tube de sang par lecture de son dit moyen d'identification (8) à l'aide d'un moyen de lecture (9) et on enregistre les informations relatives aux échantillons contenus dans ledit tube lues dans un automate de commande (5) afin de connaître l'identité du patient, le type d'analyse à pratiquer sur l'échantillon de sang contenu dans ledit tube (3, 19, 23), et en déterminer automatiquement le type de préparation que doit subir chaque tube avant analyse, ainsi qu'on enregistre la position dudit tube pour établir et programmer une cartographie électronique dans ladite zone de stockage avant de procéder aux étapes b) à e) de traitement individuel du tube, et
b) on prélève et on déplace individuellement un tube à l'aide de moyens de préhension et déplacement robotisés (24, 25, 26, 27) commandés par ledit automate de commande (5) en utilisant la cartographie électronique programmée depuis ladite zone de stockage (6, 11, 12) vers au moins une zone de préparation (10) du tube et de l'échantillon de sang, et
c) on prépare le dit tube et ledit échantillon dans ladite zone de préparation (10) selon une séquence de préparation déterminée en fonction des informations lues sur ledit moyen d'identification (8) de l'échantillon et/ou des informations entrées dans ledit automate de commande (5) par un opérateur, ladite séquence comprenant au moins une agitation du tube de manière à mélanger l'ensemble des constituants du sang contenu dans celui-ci, et
d) on déplace individuellement ledit tube immédiatement après préparation à l'aide desdits moyens de préhension et déplacement robotisés (24, 25, 26, 27) vers au moins une zone d'accès (13a, 13b) à un analyseur automatique (28, 30) sur sang total pour analyse de l'échantillon de sang contenu dans ledit tube (3, 19, 23) en fonction des informations lues sur ledit moyen d'identification dudit tube, et
e) on extrait ledit tube (3, 19, 23) dudit analyseur (28, 30) au niveau d'une dite zone d'accès (13a, 13b) après analyse et on le replace dans ladite zone de stockage (6, 11, 12) à l'aide desdits moyens de préhension et de déplacement robotisés, et de préférence
f) on réitère les opérations b) à e) pour les autres échantillons.

2. Procédé selon la revendication 1, **caractérisé en ce que** à l'étape a) lesdits tubes sont placés et maintenus verticalement dans des supports (7, 20, 21) comportant une pluralité de logements individuels de format approprié à la réception d'un dit tube (3, 19, 23) et organisés en rangées de logements contiguës, lesdits supports étant positionnés dans une dite zone de stockage (6, 11, 12) apte à recevoir une pluralité de dits supports (7, 20, 21) et accessible par lesdits moyens de préhension et déplacement robotisés (24, 25, 26, 27).

3. Procédé selon la revendication 1 ou 2, **caractérisé en ce que** à l'étape a) on place une pluralité de tubes dans ladite zone de stockage (6) et on identifie et on enregistre dans ledit automate de commande les informations relatives aux échantillons contenus dans lesdits tubes (3), ainsi que la position desdits tubes pour établir une cartographie électronique des tubes dans ladite zone de stockage avant de procéder aux étapes b) à e) de traitement individuel des tubes.

4. Procédé selon l'une des revendications 1 à 3, **caractérisé en ce que** à l'étape c) on réalise l'une au moins des opérations de préparation supplémentaires suivante:
- on provoque une aération du tube (3), et
- on vérifie le niveau dudit échantillon de sang dans ledit tube (3),
- on détermine l'existence de caillots éventuels dans ledit échantillon, et
- on vérifie le niveau d'enfoncement du bouchon (3a) fermant ledit tube.

5. Procédé selon la revendication 4, **caractérisé en ce qu'**à l'étape c) on réalise également une mise en température, de préférence un chauffage, dudit échantillon.

6. Procédé selon l'une des revendications 1 à 5, **caractérisé en ce qu'**à l'étape a) on place un tube dans une zone dite de traitement en urgence et on programme ledit automate de commande pour que la préparation et l'analyse dudit tube soit effectuée en priorité sur le(s) tube(s) présent(s) dans ladite zone de stockage

7. Procédé selon l'une des revendications 2 à 6, **caractérisé en ce que** à l'étape e) on trie et on range les tubes (3) dans différents dits supports (7) à l'aide desdits moyens de préhension et déplacement robotisés (24, 25, 26, 27) en fonction des résultats des analyses pratiquées sur les échantillons contenus dans lesdits tubes et/ou d'éventuelles opérations complémentaires à pratiquer sur lesdits échantillons.

8. Procédé selon l'une des revendications 1 à 7, **caractérisé en ce que** préalablement à la préparation et l'analyse de dits échantillons de sang total, on réalise un contrôle de qualité à l'aide de tubes de sang de contrôle (19), lesdits tubes de sangs de contrôle étant conservés dans une zone de conservation réfrigérée (11) accessible aux dits moyens de préhension et déplacement robotisés (24, 25, 26, 27), lesdits tubes de sang de contrôle (19) étant réchauffés et préparés comme un tube de sang total inconnu (3), puis successivement introduits dans ledit analyseur (28) et récupérés automatiquement et enfin replacé à leur emplacement de départ dans ladite zone réfrigérée (11) par lesdits moyens de préhension et de déplacement robotisés.

9. Procédé selon la revendication 8, **caractérisée en ce qu'**on prépare périodiquement l'analyse d'au moins un tube de sang de contrôle (19) après préparation et analyse d'un nombre déterminé de tubes de sang total (3) dans un dit analyseur (28), ledit tube de sang de contrôle (19) étant prélevé, préparé et introduit dans l'analyseur puis récupéré et stocké par lesdits moyens de préhension et déplacement robotisés (24, 25, 26, 27).

10. Procédé selon la revendication 8 ou 9, **caractérisé en ce que** :
- on effectue une moyenne de chacun des paramètres analysés sur une série d'échantillons de sang total inconnus (3) d'un nombre déterminé, et
- on compare ces valeurs moyennes de paramètres analysés à des fourchettes de valeurs nominales de ces mêmes paramètres correspondants à des patients sains enregistrées dans ledit automate de (5), et
- si commande une desdites valeurs moyennes est située à l'extérieur de la plage de valeurs nominales du paramètre correspondant, on prépare un échantillon de sang de contrôle (19) et on effectue l'analyse de ce même paramètre sur cet échantillon de contrôle, et
- si la valeur du paramètre analysé sur le sang de contrôle (19) est située dans la plage de valeurs nominales dudit paramètre, on poursuit l'analyse d'une nouvelle série d'échantillons de sang total (3) inconnus, la ou les valeurs moyennes situées à l'extérieur de la ou des plages de valeurs nominales correspondantes signifiant la présence d'au moins un échantillon de sang pathologique dans la série précédente, et
- si la valeur du paramètre analysé sur le sang de contrôle (19) est située à l'extérieur de la plage de valeurs nominales dudit paramètre, on réalise un calibrage dudit analyseur (28) avant l'analyse d'une nouvelle série d'échantillons de sang total inconnus.

11. Dispositif (1) utile pour la préparation d'analyses d'échantillons de sang total conformément à un procédé selon l'une des revendications 1 à 10, lesdits échantillons étant conservés dans des tubes (3) comportant un au moins un moyen d'identification (8) de l'échantillon et étant de préférence fermés hermétiquement par un bouchon (3a), **caractérisé en ce qu'**il comporte :
- au moins un compartiment constituant une dite zone de stockage (6, 11, 12) desdits tubes (3, 19, 23) avant et après analyse, et
- au moins un dit moyen de lecture (9) desdits moyens d'identifications (8) desdits tubes, et
- des moyens de triage (9, 8a, 9a) des tubes avant et/ou après analyses dans ladite zone de stockage
- au moins une zone de préparation (10) desdits échantillons sanguins avant analyse comportant des moyens (14, 15, 16, 17, 18) de vérification et/ou de traitement desdits tubes (3, 19, 23) contenant lesdits échantillons, notamment au moins un moyen d'agitation (14) desdits tubes, et
- au moins une zone d'accès (13a, 13b) à au moins un analyseur automatique (28, 30) sur sang total, ladite zone d'accès permettant le placement d'un dit tube (3, 19, 23) dans ledit analyseur, et
- des moyens de préhension et déplacement robotisés (24, 25, 26, 27) commandés par un automate de commande (5) en utilisant la cartographie électronique programmée et aptes à saisir et reposer lesdits tubes (3, 19, 23) individuellement dans ladite zone de stockage (6, 11, 12) et à les véhiculer dans au moins trois directions XYZ entre ladite zone de stockage, ladite zone de préparation (10) et ladite zone d'accès (13a, 13b) au dit analyseur, ledit analyseur (28, 30) étant de préférence relié et/ou commandé par ledit automate de commande (5).

12. Dispositif selon la revendication 11, **caractérisé en ce qu'**il comporte des supports (7, 20, 21) comportant des logements individuels dans lesquels lesdits tubes sont placés par un opérateur, lesdits supports étant positionnés dans ladite zone de stockage (6, 11, 12) et amovibles manuellement de celle-ci, ladite zone de stockage (6,11, 12) étant âpte à recevoir une pluralité de dits supports (7, 20, 21)et étant accessible par lesdits moyens de préhension et déplacement robotisés (24, 25, 26, 27) pour prélever puis y replacer les tubes (3, 19, 23) contenant les échantillons de sang total à analyser.

13. Dispositif selon la revendication 11 ou 12, **caractérisé en ce qu'**il comporte un compartiment de traitement en urgence (12) accessible manuellement à un opérateur depuis l'extérieur du dispositif, ledit compartiment de traitement en urgence (12) étant également accessible aux dits moyens de préhension et déplacement robotisés (24, 25, 26, 27) et comportant au moins un élément de support (22) de tubes comportant au moins un logement apte à recevoir un tube de sang (23).

14. Dispositif selon l'une des revendications 11 à 13, **caractérisé en ce que** lesdits moyens de vérification et/ou de traitement (14, 15, 16, 17, 18) comportent un dispositif (15) d'aération desdits tubes.

15. Dispositif selon l'une des revendications 11 à 14, **caractérisé en ce qu'**il comporte un compartiment (11) de stockage et de conservation de tubes de sang de contrôle (19) permettant la vérification des dits analyseurs (28, 30), ledit compartiment comportant des moyens de refroidissement desdits tubes.

16. Dispositif selon l'une des revendications 11 à 15, **caractérisé en ce que** lesdits tubes de sang de contrôle (19) sont positionnés et maintenus dans ledit compartiment (11) de conservation dans les logements individuels d'un support (20), lesdits moyens de refroidissement étant constitués par des cellules thermoélectriques (cellules à effet Peltier) disposées de préférence dans lesdits logements ou sur la périphérie de ceux-ci.

17. Dispositif selon l'une des revendications 11 à 16, **caractérisé en ce que** lesdits moyens de vérification et/ou de traitement comportent au choix:
- un moyen (16) de détection du niveau de sang dans un dit tube (3) et de la présence éventuelle de caillots dans ce sang, et/ou
- un moyen de vérification (17) du niveau d'enfoncement du bouchon (3a) desdits tubes de sang (3) et /ou
- un moyen de chauffage (18) desdits tubes, de préférence constitué de cellules thermoélectriques.

18. Dispositif selon l'une des revendications 11 à 17, **caractérisé en ce que** les dits moyens de préhension et déplacement robotisés comportent une pince articulée (27) adaptée pour saisir lesdits tubes (3, 19, 23), de préférence sous la base du bouchon, ladite pince étant mobile en translation verticalement et horizontalement selon trois axes orthogonaux XYZ par l'intermédiaire d'un dispositif translateur comportant au moins trois rails de guidage (24, 25, 26) dirigés selon lesdits axes XYZ et solidaires deux à deux, un premier rail (24) horizontal fixe supportant un second rail (25) horizontal perpendiculaire au dit premier rail (24) et étant mobile en translation sur celui-ci, un dernier rail (26) vertical étant solidaire dudit second rail (25) et mobile en translation sur celui-ci et perpendiculairement à celui-ci, ladite pince (27) étant solidaire dudit troisième rail (26).

19. Dispositif selon l'une des revendications 11 à 17, **caractérisé en ce que** les dits moyens de préhension et déplacement robotisés comportent un bras articulé muni à une de ses extrémités d'une pince de préhension desdits tubes de sang.

20. Dispositif selon l'une des revendications 11 à 19 **caractérisé en ce qu'**il est confiné dans une enceinte de protection (4) comportant au moins une première ouverture (4a, 4b) d'accès à au moins un dit analyseur et une seconde ouverture (4c) d'accès au dit compartiment de traitement en urgence (12).

21. Dispositif selon l'une des revendications 11 à 20, **caractérisé en ce que** la (les) dite(s) zone(s) d'accès (13a, 13b) au(x) dit(s) analyseur(s) (28, 30) comportent un chariot mobile (29a, 29b) apte à se déplacer entre ledit dispositif (1) et un dit analyseur, ledit chariot étant commandé par ledit automate de commande (5) et comportant au moins un logement apte à recevoir un dit tube de sang par lesdits moyens de préhension et déplacement robotisés (24, 25, 26, 27).

22. Dispositif selon l'une des revendications 18 à 21, **caractérisé en ce que** lesdits moyens de préhension et déplacement robotisés (24, 25, 26, 27) comportent des moyens de détection et/ou de visualisation desdits tubes contenant lesdits échantillons sanguins et desdits tubes de sang de contrôle dans lesdites zones des stockage (6), zone de préparation (10), zone(s) d'accès (13a, 13b) au(x) dit(s) analyseur(s), dans ledit compartiment de traitement en urgence (12)et dans ledit compartiment (11) de stockage et de conservation des tubes de sang de contrôles.

23. Dispositif selon l'une des revendications 12 à 22, **caractérisé en ce que** lesdits supports (7, 20) disposés dans ladite zone de stockage (6) et/ou dans ledit compartiment de conservation (11) des tubes de sang de contrôle (19) comportent également un moyen d'identification (8a) apte à être lu par un dit moyen de lecture (9a).

24. Dispositif automatisé d'analyse sur sang total comportant au moins un analyseur automatique sur sang total (28, 30), ledit analyseur comportant un moyen de prélèvement, en particulier une aiguille, d'un échantillon de sang à analyser contenu dans un tube (3, 19, 23), de préférence fermé hermétiquement par un bouchon, **caractérisé en ce qu'**il comporte au moins un dispositif (1) utile pour la préparation d'analyses d'échantillons sanguins de sang total selon l'une des revendications 11 à 23 accouplé audit analyseur et communiquant avec celui-ci au niveau d'au moins une dite zone d'accès (13a, 13b) dudit dispositif (1) de préparation audit analyseur.

## Claims

1. A method of preparing analyses of samples of total blood, said samples being conserved in tubes (3, 19, 23) including identification means (8) for identifying the samples and preferably hermetically closed by plugs (3a), the method being **characterized by** the following successive steps:
a) placing a said tube (3, 19, 23) in a storage zone (6, 11, 12) and identifying said tube of blood by reading its said identification means (8) with the help of reader means (9) and recording the information relating to the samples contained in said tube read in an automatic controller (5) in order to know the identity of the patient, the type of analysis to be performed on the sample of blood contained in said tube (3, 19, 23), and to determine automatically therefrom the type of preparation to which each tube is to subjected before analysis, said information being recorded together with the positions of said tubes so as to establish and program an electronic map of the tubes in said storage zone prior to proceeding with the steps b) to e) of individually treating the tubes; and
b) taking and moving said tube individually with the help of robotic gripper and displacement means (24, 25, 26, 27) controlled by said automatic controller (5) using the programmed electronic map from said storage zone (6, 11, 12) to at least one preparation zone (10) for preparing the tube and the blood sample ; and
c) preparing said tube and said sample in said preparation zone (10) in application of a preparation sequence that is determined as a function of the information read from said sample identification means (8) and/or information input into said automatic controller (5) by an operator, said sequence including at least agitating the tube so as to mix together all of the components of the blood contained therein; and
d) individually displacing said tube immediately after preparation with the help of said robotic gripper and displacement means (24, 25, 26, 27) to at least one access zone (13a, 13b) giving access to an automatic analyzer (28, 30) of total blood to analyze the blood sample contained in said tube (3, 19, 23) as a function of the information read from said identification means of said tube ; and
e) extracting said tube (3, 19, 23) from said analyzer (28, 30) from a said access zone (13a, 13b) after analysis and replacing it in said storage zone (6, 11, 12) with the help of said robotic gripper and displacement means; and preferably
f) reiterating operations b) to e) for the other samples.

2. A method according to claim 1, **characterized in that** in step a) said tubes are placed and held vertically in supports (7, 20, 21), each having a plurality of individual housings of format suitable for receiving a said tube (3, 19, 23) and organized in rows of adjacent housings, said supports being positioned in said storage zone (6, 11, 12) suitable for receiving a plurality of said supports (7, 20, 21) and accessible to said robotic gripper and displacement means (24, 25, 26, 27).

3. A method according to claim 1 or claim 2, **characterized in that** in step a), a plurality of tubes is placed in said storage zone (6) and information relating to the samples contained in said tube (3) is identified and recorded in said automatic controller, together with the positions of said tubes so as to establish an electronic map of the tubes in said storage zone prior to proceeding with the steps b) to e) of individually treating the tubes.

4. A method according to any one of claims 1 to 3, **characterized in that** in step c), at least one of the following additional operations is performed:
· causing the tube (3) to be aerated ; and
· verifying the level of said sample of blood in said tube (3) ; and
· determining whether any blood clots exist in said sample ; and
· verifying the depth to which the plug (3a) closing said tube has been engaged in said tube.

5. A method according to claim 4, **characterized in that** in step c) the temperature of said sample is set, preferably by heating.

6. A method according to any one of claims 1 to 5, **characterized in that** in step a) a tube is placed in an emergency treatment zone and said automatic controller is programmed so that the preparation and analysis of said tube is performed with priority over that of the tube(s) present in said storage zone.

7. A method according to any one of claims 2 to 6, **characterized in that** in step e), the tubes (3) are sorted and stored in different said supports (7) with the help of said robotic gripper and displacement means (24, 25, 26, 27) as a function of the results of the analyses performed on the samples contained in said tubes and/or as a function of any additional operations that are to be performed on said samples.

8. A method according to any one of claims 1 to 7, **characterized in that** prior to preparing and analyzing said samples of total blood, quality control is performed using tubes (19) containing control samples of blood, said control sample tubes being conserved in a refrigerated conservation zone (11) accessible to said robotic gripper and displacement means (24, 25, 26, 27), said control sample tubes (19) being heated and prepared like tubes (3) of unknown total blood, and then successively introduced into said analyzer (28) and recovered automatically in order to be replaced in their starting locations in said refrigerated zone (11) by said robotic gripper and displacement means.

9. A method according to claim 8, **characterized in that** the analysis of at least one control sample tube (19) is prepared periodically after preparing and analyzing a determined number of total blood tubes (3) in a said analyzer (28), said control sample tube (19) being taken, prepared, and introduced into the analyzer and then recovered and stored by said robotic gripper and displacement means (24, 25, 26, 27).

10. A method according to claim 8 or claim 9, **characterized by** the following steps :
· taking an average of each of the parameters analyzed on a series of a determined number of unknown total blood samples (3); and
· comparing the average values of the analyzed parameters with ranges of nominal values for said parameters corresponding to healthy patients and recorded in said controller (5) ; and
· if one of said mean values lies outside the range of nominal values for the corresponding parameter, preparing a control sample of blood (19) and analyzing the same parameter on the control sample ; and
· if the value of the parameter as analyzed on the control sample (19) lies in a range of nominal values for said parameter, continuing analysis on a new series of unknown total blood samples (3), the mean value(s) situated outside the range(s) of corresponding nominal values indicating that at least one sample of pathological blood is present in the preceding series; and
· if the value of the parameter analyzed on the control sample (19) lies outside the range of nominal values for said parameter, then said analyzer (28) is calibrated prior to analyzing a new series of unknown total blood samples.

11. A device (1) suitable for preparing analyses of samples of total blood in accordance with a method according to any one of claims 1 to 10, said samples being conserved in tubes (3) each having at least one identification means (8) for identifying the tube and preferably being closed hermetically by a plug (3a), the device being **characterized in that** it comprises:
· at least one compartment constituting a said storage zone (6, 11, 12) for storing said tubes (3, 19, 23) before and after analysis ; and
· at least one said read means (9) for reading said identification means (8) of said tubes; and
· sorter means (9, 8a, 9a) for sorting tubes before and/or after analyses in said storage zone ; and
· at least one preparation zone (10) for preparing said blood samples prior to analysis and including means (14, 15, 16, 17, 18) for verifying and/or treating said tubes (3, 19, 23) containing said samples, and in particular at least one agitator means (14) for agitating said tubes ; and
· at least one access zone (13a, 13b) giving access to at least one automatic analyzer (28, 30) of total blood, said access zone enabling a said tube (3, 19, 23) to be placed in said analyzer ; and
· robotic gripper and displacement means (24, 25, 26, 27) controlled by an automatic controller (5) using the programmed electronic map and suitable for taking hold of and replacing said tubes (3, 19, 23) individually in said storage zone (6, 11, 12) and for conveying them in at least three directions XYZ between said storage zone, said preparation zone (10) and said access zone (13a, 13b) giving access to said analyzer, said analyzer (28, 30) preferably being connected to and/or controlled by said automatic controller (5).

12. A device according to claim 11, **characterized in that** it includes supports (7, 20, 21) including individual housings in which said tubes are placed by an operator, said supports being positioned in said storage zone (6, 11, 12) and being manually removable therefrom, said storage zone (6, 11, 12) being suitable for receiving a plurality of said supports (7, 20, 21) and being accessible by said robotic gripper and displacement means (24, 25, 26, 27) so as to enable the tubes (3, 19, 23) containing the samples of total blood for analysis to be taken therefrom and replaced therein.

13. A device according to claim 11 or claim 12, **characterized in that** it includes an emergency treatment compartment (12) that is manually accessible to an operator from outside the device, said emergency treatment compartment (12) also being accessible to said robotic gripper and displacement means (24, 25, 26, 27) and including at least one tube support element (22) including at least one housing suitable for receiving a tube (23) of blood.

14. A device according to any one of claims 11 to 13, **characterized in that** said verification and/or treatment means (14, 15, 16, 17, 18) including a device (15) for aerating said tubes.

15. A device according to any one of claims 11 to 14, **characterized in that** it includes a compartment (11) for storing and conserving tubes (19) of control samples of blood to enable said analyzers (28, 30) to be verified, said compartment including means for cooling said tubes.

16. A device according to any one of claims 11 to 15, **characterized in that** said control sample tubes (19) are positioned and held in said conservation compartment (11) in individual housings of a support (20), said cooling means being constituted by thermoelectric cells (Peltier effect cells) preferably placed in said housings or at the periphery thereof.

17. A device according to any one of claims 11 to 16, **characterized in that** said verification and/or treatment means include a selection of:
· means (16) for detecting the level of blood in a said tube (3) and the presence of clots, if any, in said blood; and/or
· means (17) for verifying the level to which the plug (3a) is put into a said tube (3) of blood; and/or
· means (18) for heating said tubes, preferably constituted by thermoelectrical cells.

18. A device according to any one of claims 11 to 17, **characterized in that** said robotic gripper and displacement means comprise a hinged clamp (27) adapted to take hold of said tubes (3, 19, 23) , preferably under the base of the plug, said clamp being movable vertically and horizontally in translation along three orthogonal XYZ axes by means of a transporter device having at least three guide rails (24, 25, 26) directed along said XYZ axes and connected together in pairs, comprising a first rail (24) that is horizontal and stationary, supporting a second rail (25) that is horizontal and perpendicular to said first rail (24), being movable in translation thereon, and a third rail (26) that is vertical, being secured to said second rail (25) and being movable in translation thereon and perpendicularly thereto, said clamp (27) being secured to said third rail (26).

19. A device according to any one of claims 11 to 17, **characterized in that** said robotic gripper and displacement means comprise an articulated arm provided at one of its ends with a clamp for gripping said tubes of blood.

20. A device according to any one of claims 11 to 19, **characterized in that** it is confined in a protective enclosure (4) including at least one access opening (4a, 4b) giving access to at least one said analyzer, and a second access opening (4c) giving access to an emergency treatment compartment (12).

21. A device according to any one of claims 11 to 20, **characterized in that** said access zone(s) (13a, 13b) giving access to said analyzer(s) (28, 30) includes respective moving carriages (29a, 29b) suitable for moving between said device (1) and a said analyzer, each said carriage being controlled by said automatic controller (5) and including at least one housing suitable for receiving a said tube of blood from said robotic gripper and displacement means (24, 25, 26, 27).

22. A device according to any one of claims 18 to 21, **characterized in that** said robotic gripper and displacement means (24, 25, 26, 27) include means for detecting and/or viewing said tubes containing said samples of blood and said tubes containing control samples in said storage zones (6), said preparation zone (10), said zone(s) (13a, 13b) giving access to said analyzer(s), in said emergency treatment compartment (12), and in said compartment (11) for storing and conserving tubes of control samples.

23. A device according to any one of claims 12 to 22, **characterized in that** said supports (7, 20) disposed in said storage zone (6) and/or in said compartment (11) for conserving tubes (19) of control samples also include identification means (8a) suitable for being read by a said read means (9a).

24. An automatic device for analyzing total blood comprising at least one automatic analyzer of total blood (28, 30), said analyzer including means, in particular, a needle for taking blood from a sample to be analyzed that is contained in a tube (3, 19, 23), which tube is preferably hermetically closed by a plug, the device being **characterized in that** it includes at least one device (1) suitable for preparing analyses of samples of total blood according to any one of claims 11 to 23 coupled to said analyzer and communicating therewith via at least one said access zone (13a, 13b) of said preparation device (1) giving access to said analyzer.

## Patentansprüche

1. Verfahren zur Vorbereitung von Analysen von Vollblutproben, wobei die Proben in Röhrchen (3, 19, 23) aufbewahrt werden, die ein Mittel zur Identifizierung (8) der Probe aufweisen und durch einen Stopfen (3a) vorzugsweise hermetisch verschlossen sind, **dadurch gekennzeichnet, daß** nacheinander:
a) ein Röhrchen (3, 19, 23) in einem Lagerungsbereich (6, 11, 12) angeordnet wird und das Blutröhrchen durch Lesen seines Identifikationsmittels (8) mit Hilfe eines Lesemittels (9) identifiziert wird und die gelesenen Informationen bezüglich der in dem Röhrchen enthaltenen Proben in einem Steuerautomaten (5) gespeichert werden, um die Identität des Patienten, die Art der Analyse, die an der in dem Röhrchen (3, 19, 23) enthaltenen Blutprobe durchzuführen ist, zu kennen und um hieraus automatisch die Art der Vorbereitung zu bestimmen, der jedes Röhrchen vor der Analyse unterzogen werden muß, und die Position des Röhrchens gespeichert wird, um eine elektronische Kartierung in dem Lagerungsbereich zu erstellen und zu programmieren, bevor die Schritte b) bis e) zur Einzelbehandlung des Röhrchens durchgeführt werden, und
b) ein Röhrchen mit Hilfe von robotisierten Greif- und Bewegungsmitteln (24, 25, 26, 27), die über den Steuerautomaten (5) unter Verwendung der programmierten elektronischen Kartierung gesteuert werden, einzeln entnommen und von dem Lagerungsbereich (6, 11, 12) zu wenigstens einem Bereich zur Vorbereitung (10) des Röhrchens und der Blutprobe bewegt wird, und
c) das Röhrchen und die Probe in dem Vorbereitungsbereich (10) entsprechend einer bestimmten Vorbereitungsfolge in Abhängigkeit der auf dem Identifikationsmittel (8) der Probe gelesenen Informationen und/oder der durch eine Bedienungsperson in den Steuerautomaten (5) eingegebenen Informationen vorbereitet werden, wobei die Folge wenigstens ein Schütteln des Röhrchens umfaßt, so daß alle Bestandteile des in diesem enthaltenen Blutes gemischt werden, und
d) das Röhrchen unmittelbar nach der Vorbereitung mit Hilfe der robotisierten Greif- und Bewegungsmittel (24, 25, 26, 27) einzeln zu wenigstens einem Zugangsbereich (13a, 13b) zu einem automatischen Vollblutanalysator (28, 30) für die Analyse der in dem Röhrchen (3, 19, 23) enthaltenen Blutprobe in Abhängigkeit der auf dem Identifikationsmittel des Röhrchens gelesenen Informationen bewegt wird, und
e) nach der Analyse das Röhrchen (3, 19, 23) im Bereich eines Zugangsbereichs (13a, 13b) aus dem Analysator (28, 30) entnommen wird und mit Hilfe der robotisierten Greif- und Bewegungsmittel wieder in den Lagerungsbereich (6, 11, 12) verbracht wird und vorzugsweise
f) die Arbeitsschritte b) bis e) für die anderen Proben wiederholt werden.

2. Verfahren nach Anspruch 1, **dadurch gekennzeichnet, daß** bei Schritt a) die Röhrchen in Trägern (7, 20, 21), die eine Vielzahl von Einzelaufnahmen umfassen, welche ein zum Aufnehmen eines Röhrchens (3, 19, 23) geeignetes Format aufweisen und in aneinandergrenzenden Aufnahmenreihen organisiert sind, vertikal angeordnet und gehalten sind, wobei die Träger in einem Lagerungsbereich (6, 11, 12) angeordnet sind, der geeignet ist, eine Vielzahl von Trägern (7, 20, 21) aufzunehmen, und der über die robotisierten Greif- und Bewegungsmittel (24, 25, 26, 27) zugänglich ist.

3. Verfahren nach Anspruch 1 oder 2, **dadurch gekennzeichnet, daß** bei Schritt a) eine Vielzahl von Röhrchen in dem Lagerungsbereich (6) angeordnet wird und die Informationen bezüglich der in den Röhrchen (3) enthaltenen Proben identifiziert und in dem Steuerautomaten gespeichert werden sowie die Position der Röhrchen gespeichert wird, um eine elektronische Kartierung der Röhrchen in dem Lagerungsbereich vor Durchführen der Schritte b) bis e) zur Einzelbehandlung der Röhrchen zu erstellen.

4. Verfahren nach einem der Ansprüche 1 bis 3, **dadurch gekennzeichnet, daß** bei Schritt c) wenigstens einer der folgenden zusätzlichen Vorbereitungsschritte durchgeführt wird:
- es wird eine Belüftung des Röhrchens (3) bewirkt, und
- es wird der Pegel der Blutprobe in dem Röhrchen (3) überprüft,
- es wird das Vorliegen eventueller Blutgerinnsel in der Probe bestimmt, und
- es wird die Einsteckhöhe des das Röhrchen verschließenden Stopfens (3a) überprüft.

5. Verfahren nach Anspruch 4, **dadurch gekennzeichnet, daß** bei Schritt c) auch ein Erwärmen, vorzugsweise ein Erhitzen der Probe vollzogen wird.

6. Verfahren nach einem der Ansprüche 1 bis 5, **dadurch gekennzeichnet, daß** bei Schritt a) ein Röhrchen in einem sogenannten Dringlichkeitsbehandlungsbereich plaziert wird und der Steuerautomat programmiert wird, damit die Vorbereitung und die Analyse des Röhrchens vorrangig vor dem (den) in dem Lagerungsbereich vorhandenen Röhrchen durchgeführt wird.

7. Verfahren nach einem der Ansprüche 2 bis 6, **dadurch gekennzeichnet, daß** bei Schritt e) die Röhrchen (3) mit Hilfe der robotisierten Greif- und Bewegungsmittel (24, 25, 26, 27), in Abhängigkeit der Ergebnisse der an den in den Röhrchen enthaltenen Proben durchgeführten Analysen und/oder von eventuellen ergänzenden Arbeitsschritten, die an den Proben zu vollziehen sind, sortiert und in verschiedenen Trägern (7) angeordnet werden.

8. Verfahren nach einem der Ansprüche 1 bis 7, **dadurch gekennzeichnet, daß** vor der Vorbereitung und der Analyse von Vollblutproben eine Qualitätskontrolle mit Hilfe von Kontrollblutröhrchen (19) durchgeführt wird, wobei die Kontrollblutröhrchen in einem gekühlten Aufbewahrungsbereich (11), welcher für die robotisierten Greif- und Bewegungsmittel (24, 25, 26, 27) zugänglich ist, aufbewahrt werden, wobei die Kontrollblutröhrchen (19) erhitzt und wie ein unbekanntes Vollblutröhrchen (3) vorbereitet werden, anschließend durch die robotisierten Greif- und Bewegungsmittel nacheinander in den Analysator (28) eingeführt und automatisch aufgenommen werden und schließlich an ihren Ausgangsplatz in dem gekühlten Bereich (11) zurückgebracht werden.

9. Verfahren nach Anspruch 8, **dadurch gekennzeichnet, daß** nach der Vorbereitung und Analyse einer bestimmten Anzahl von Vollblutröhrchen (3) in einem Analysator (28) periodisch die Analyse wenigstens eines Kontrollblutröhrchens (19) vorbereitet wird, wobei das Kontrollblutröhrchen (19) mittels der robotisierten Greif-und Bewegungsmittel (24, 25, 26, 27) entnommen, vorbereitet und in den Analysator eingeführt, dann wieder aufgenommen und gelagert wird.

10. Verfahren nach Anspruch 8 oder 9, **dadurch gekennzeichnet, daß**:
- ein Mittelwert eines jeden der Parameter, die an einer Reihe von unbekannten Vollblutproben (3) mit einer bestimmten Anzahl analysiert werden, gebildet wird und
- diese Mittelwerte von analysierten Parametern mit Nennwertebereichen dieser gleichen Parameter, die in dem Steuerautomaten (5) gespeicherten gesunden Patienten entsprechen, verglichen werden, und
- wenn einer der Mittelwerte außerhalb des Nennwertebereichs des entsprechenden Parameters liegt, eine Kontrollblutprobe (19) vorbereitet und die Analyse dieses gleichen Parameters an dieser Kontrollprobe vollzogen wird, und
- wenn der Wert des an dem Kontrollblut (19) analysierten Parameters innerhalb des Nennwertebereichs des Parameters liegt, die Analyse einer neuen Reihe von unbekannten Vollblutproben (3) fortgesetzt wird, wobei der oder die Mittelwert(e), der (die) außerhalb des oder der entsprechenden Nennwertebereiche(s) gelegenen ist (sind), das Vorliegen wenigstens einer pathologischen Blutprobe in der vorhergehenden Reihe bedeutet (bedeuten), und
- wenn der Wert des an dem Kontrollblut (19) analysierten Parameters außerhalb des Nennwertebereichs des Parameters liegt, ein Kalibrieren des Analysators (28) vor der Analyse einer neuen Reihe von unbekannten Vollblutproben durchgeführt wird.

11. Vorrichtung (1) für die Vorbereitung von Analysen von Vollblutproben gemäß einem Verfahren nach einem der Ansprüche 1 bis 10, wobei die Proben in Röhrchen (3) aufbewahrt werden, die wenigstens ein Mittel zur Identifikation (8) der Probe aufweisen und die durch einen Stopfen (3a) vorzugsweise hermetisch verschlossen sind, **dadurch gekennzeichnet, daß** sie umfaßt:
- wenigstens ein Abteil, das einen Bereich zur Lagerung (6, 11, 12) der Röhrchen (3, 19, 23) vor und nach der Analyse bildet, und
- wenigstens ein Mittel zum Lesen (9) der Identifikationsmittel (8) der Röhrchen, und
- Mittel zum Sortieren (9, 8a, 9a) der Röhrchen vor und/oder nach Analysen in dem Lagerungsbereich,
- wenigstens einen Bereich zur Vorbereitung (10) der Blutproben vor der Analyse, mit Mitteln (14, 15, 16, 17, 18) zur Überprüfung und/oder Behandlung der die Proben enthaltenden Röhrchen (3, 19, 23), insbesondere wenigstens einem Mittel zum Schütteln (14) der Röhrchen, und
- wenigstens einen Zugangsbereich (13a, 13b) zu wenigstens einem automatischen Vollblutanalysator (28, 30), wobei der Zugangsbereich das Plazieren eines Röhrchens (3, 19, 23) in dem Analysator ermöglicht, und
- robotisierte Greif- und Bewegungsmittel (24, 25, 26, 27), die unter Verwendung der programmierten elektronischen Kartierung durch einen Steuerautomaten (5) gesteuert werden und die geeignet sind, die Röhrchen (3, 19, 23) in dem Lagerungsbereich (6, 11, 12) einzeln zu erfassen und wieder abzustellen und sie in wenigstens drei Richtungen XYZ zwischen dem Lagerungsbereich, dem Vorbereitungsbereich (10) und dem Zugangsbereich (13a, 13b) zu dem Analysator zu bewegen, wobei der Analysator (28, 30) vorzugsweise über den Steuerautomaten (5) verbunden ist und/oder gesteuert wird.

12. Vorrichtung nach Anspruch 11, **dadurch gekennzeichnet, daß** sie Träger (7, 20, 21) mit Einzelaufnahmen umfaßt, in denen die Röhrchen durch eine Bedienungsperson angeordnet werden, wobei die Träger in dem Lagerungsbereich (6, 11, 12) angeordnet und aus diesem manuell lösbar sind, wobei der Lagerungsbereich (6, 11, 12) geeignet ist, eine Vielzahl von Trägern (7, 20, 21) aufzunehmen, und über die robotisierten Greif-und Bewegungsmittel (24, 25, 26, 27) zugänglich ist, um die Röhrchen (3, 19, 23), die die zu analysierenden Vollblutproben enthalten, zu entnehmen und wieder hierin zu plazieren.

13. Vorrichtung nach Anspruch 11 oder 12, **dadurch gekennzeichnet, daß** sie ein Dringlichkeitsbehandlungsabteil (12) umfaßt, das für eine Bedienungsperson von der Außenseite der Vorrichtung manuell zugänglich ist, wobei das Dringlichkeitsbehandlungsabteil (12) auch für die robotisierten Greif- und Bewegungsmittel (24, 25, 26, 27) zugänglich ist und wenigstens ein Tragelement (22) für Röhrchen umfaßt, das wenigstens eine Aufnahme, die geeignet ist, ein Blutröhrchen (23) aufzunehmen, aufweist.

14. Vorrichtung nach einem der Ansprüche 11 bis 13, **dadurch gekennzeichnet, daß** die Prüfungs- und/oder Behandlungsmittel (14, 15, 16, 17, 18) eine Vorrichtung (15) zur Belüftung der Röhrchen umfaßt.

15. Vorrichtung nach einem der Ansprüche 11 bis 14, **dadurch gekennzeichnet, daß** sie ein Abteil (11) zur Lagerung und Aufbewahrung von Kontrollblutröhrchen (19) umfaßt, das die Überprüfung der Analysatoren (28, 30) ermöglicht, wobei das Abteil Mittel zum Kühlen der Röhrchen umfaßt.

16. Vorrichtung nach einem der Ansprüche 11 bis 15, **dadurch gekennzeichnet, daß** die Kontrollblutröhrchen (19) in dem Aufbewahrungsabteil (11) in den Einzelaufnahmen eines Trägers (20) angeordnet und gehalten sind, wobei die Kühlmittel von thermoelektrischen Zellen (Peltier-Zellen) gebildet sind, die vorzugsweise in den Aufnahmen oder an deren Umfang angeordnet sind.

17. Vorrichtung nach einem der Ansprüche 11 bis 16, **dadurch gekennzeichnet, daß** die Prüfungs- und/oder Behandlungsmittel wahlweise umfassen:
- ein Mittel (16) zur Erfassung des Blutpegels in einem Röhrchen (3) sowie des eventuellen Vorliegens von Blutgerinnseln in diesem Blut, und/oder
- ein Mittel zur Überprüfung (17) der Einsteckhöhe des Stopfens (3a) der Blutröhrchen (3) und/oder
- ein Mittel zum Erhitzen (18) der Röhrchen, das vorzugsweise von thermoelektrischen Zellen gebildet ist.

18. Vorrichtung nach einem der Ansprüche 11 bis 17, **dadurch gekennzeichnet, daß** die robotisierten Greif- und Bewegungsmittel eine Gelenkzange (27) umfassen, die geeignet ist, die Röhrchen (3, 19, 23), vorzugsweise unter der Grundfläche des Stopfens, zu erfassen, wobei die Zange mittels einer Verschiebevorrichtung entlang von drei orthogonalen Achsen XYZ vertikal und horizontal verschiebebeweglich ist, welche wenigstens drei Führungsschienen (24, 25, 26) umfaßt, die entlang der Achsen XYZ ausgerichtet und paarweise fest verbunden sind, wobei eine erste feste horizontale Schiene (24) eine zweite horizontale Schiene (25) trägt, welche zu der ersten Schiene (24) senkrecht steht und an dieser verschiebebeweglich ist, wobei eine letzte vertikale Schiene (26) mit der zweiten Schiene (25) fest verbunden und an dieser verschiebebeweglich ist und zu dieser senkrecht steht, wobei die Zange (27) mit der dritten Schiene (26) fest verbunden ist.

19. Vorrichtung nach einem der Ansprüche 11 bis 17, **dadurch gekennzeichnet, daß** die robotisierten Greif- und Bewegungsmittel einen Gelenkarm umfassen, der an einem seiner Enden mit einer Zange zum Greifen der Blutröhrchen ausgestattet ist.

20. Vorrichtung nach einem der Ansprüche 11 bis 19, **dadurch gekennzeichnet, daß** sie in einem Schutzraum (4) untergebracht ist, der wenigstens eine erste Öffnung (4a, 4b) für den Zugang zu wenigstens einem Analysator sowie eine zweite Öffnung (4c) für den Zugang zu dem Dringlichkeitsbehandlungsabteil (12) aufweist.

21. Vorrichtung nach einem der Ansprüche 11 bis 20, **dadurch gekennzeichnet, daß** der (die) Zugangsbereich(e) (13a, 13b) zu dem (den) Analysator(en) (28, 30) einen beweglichen Wagen (29a, 29b) umfassen, der geeignet ist, sich zwischen der Vorrichtung (1) und einem Analysator zu bewegen, wobei der Wagen durch den Steuerautomaten (5) gesteuert wird und wenigstens eine Aufnahme umfaßt, die geeignet ist, ein Blutröhrchen mittels der robotisierten Greif- und Bewegungsmittel (24, 25, 26, 27) aufzunehmen.

22. Vorrichtung nach einem der Ansprüche 18 bis 21, **dadurch gekennzeichnet, daß** die robotisierten Greif- und Bewegungsmittel (24, 25, 26, 27) Mittel zum Erfassen und/oder Anzeigen der die Blutproben enthaltenden Röhrchen und der Kontrollblutröhrchen in den Lagerungsbereichen (6), dem Vorbereitungsbereich (10), dem (den) Zugangsbereich(en) (13a, 13b) zu dem (den) Analysator(en), in dem Dringlichkeitsbehandlungsabteil (12) und in dem Abteil (11) zur Lagerung und Aufbewahrung der Kontrollblutröhrchen umfassen.

23. Vorrichtung nach einem der Ansprüche 12 bis 22, **dadurch gekennzeichnet, daß** die Träger (7, 20), die in dem Lagerungsbereich (6) und/oder in dem Abteil zur Aufbewahrung (11) der Kontrollblutröhrchen (19) angeordnet sind, ebenfalls ein Identifikationsmittel (8a) umfassen, das geeignet ist, von einem Lesemittel (9a) gelesen zu werden.

24. Automatisierte Vorrichtung zur Vollblutanalyse, umfassend wenigstens einen automatischen Vollblutanalysator (28, 30), wobei der Analysator ein Mittel zur Entnahme, insbesondere eine Nadel, einer zu analysierenden Blutprobe umfaßt, welche in einem Röhrchen (3, 19, 23) enthalten ist, das durch einen Stopfen vorzugsweise hermetisch verschlossen ist, **dadurch gekennzeichnet, daß** sie wenigstens eine Vorrichtung (1) für die Vorbereitung von Analysen von Blutproben aus Vollblut nach einem der Ansprüche 11 bis 23 umfaßt, die mit dem Analysator gekoppelt ist und mit diesem im Bereich wenigstens eines Zugangsbereichs (13a, 13b) der Vorbereitungsvorrichtung (1) zu dem Analysator in Verbindung steht.
